# EUROPEAN PATENT APPLICATION

(11) **EP 4 192 113 A1**
(43) Date of publication of application: **07.06.2023**
(21) Application number: 21853475.8
(22) Date of filing: 28.07.2021
(51) Int. Cl.: H04W 48/02

(54) **ACCESS INFORMATION INDICATION METHOD, APPARATUS AND SYSTEM**

(30) Priority: 07.08.2020 CN 202010791732
(71) Applicant: Huawei Technologies Co., Ltd., Shenzhen, Guangdong 518129 (CN)
(72) Inventor: LIU, Zhe, Shenzhen, Guangdong 518129 (CN); YU, Zheng, Shenzhen, Guangdong 518129 (CN); WEN, Ronghui, Shenzhen, Guangdong 518129 (CN); ZHANG, Ming, Shenzhen, Guangdong 518129 (CN)
(74) Representative: Roth, Sebastian
(86) International application number: PCT/CN2021/108857
(87) International publication number: WO 2022/028285

(57) **Abstract**

This application relates to the field of wireless communication, and in particular, to an access method in a wireless communication system, to resolve a problem in the conventional technology that a network device cannot flexibly indicate one or more types of terminal devices to access a cell or be barred from accessing the cell. The method includes: A network device sends at least one piece of first information to a first terminal device, where the at least one piece of first information indicates at least one of a first access capability and first access permission. The first terminal device determines, based on the at least one piece of first information, whether the network device has a capability for access of the first terminal device and/or whether access of the first terminal device is allowed.

## Description

### TECHNICAL FIELD

The present invention relates to the field of wireless communication, and in particular, to an access information indication method in a wireless communication system.

### BACKGROUND

In the conventional technology, when a terminal device attempts to access a cell, the terminal device detects access-related information of a network device. When the terminal device receives a message indicating that the network device bars access, the terminal device attempts to access another cell. The access barring message configured by the network device is broadcast to the terminal device. In this access method, one or more types of terminal devices cannot be flexibly indicated to access a cell or be barred from accessing the cell.

### SUMMARY

This application provides an access information indication method, to resolve a problem in the conventional technology that a network device cannot flexibly indicate one or more types of terminal devices to access a cell or be barred from accessing the cell.

According to a first aspect, this application provides a communication method. The method may be performed by a terminal device, or may be performed by a chip in a terminal device. The following provides descriptions by using an example in which the method is performed by the terminal device. A first terminal device receives at least one piece of first information from a network device. The at least one piece of first information indicates at least one of a first access capability and first access permission. The first access capability indicates whether the network device supports access of the first terminal device. The first access permission indicates whether the network device allows access of the first terminal device. The first terminal device determines, based on the at least one piece of first information, whether the network device supports access of the first terminal device and/or whether the network device allows access of the first terminal device.

Based on this solution, the network device indicates, to the first terminal device by using the at least one piece of first information, whether the network device is capable of supporting access of the first terminal device and/or whether the network device allows access of the first terminal device. When the network device does not support access of the first terminal device, the network device does not have a capability for access of a terminal device of a terminal device type to which the first terminal device belongs. When the network device does not allow access of the first terminal device, the network device has a capability for access of the first terminal device, but does not allow access of the first terminal device.

In an optional implementation, the at least one piece of first information includes one or more bits. The at least one piece of first information indicates one or more of the following:
access of the first terminal device is not supported;
access of the first terminal device is not allowed;
access of the first terminal device is allowed, and the first terminal device receives information based on a first resource;
access of the first terminal device is allowed, and the first terminal device receives information based on a second resource;
access of the first terminal device is allowed, and the first terminal device receives information based on a third resource;
access of the first terminal device is not allowed within a first time range;
access of the first terminal device is not allowed within a second time range; and
access of the first terminal device is not allowed within a third time range.

The first resource, the second resource, and the third resource are different resources. The first time range, the second time range, and the third time range are three different time ranges. In the foregoing implementation, the network device may configure three or more types of resources for access of the first terminal device. The first terminal device determines, based on the at least one piece of first information, a resource based on which the first terminal device accesses the network device, or referred to as a resource based on which the first terminal device receives information sent by the network device and/or sends information to the network device. The network device more flexibly indicates a resource corresponding to access of the first terminal device to the network device. This avoids resource congestion caused by an excessive quantity of terminal devices that access the network device based on a same resource, and meets a load balancing requirement when the first terminal device accesses the network device. The network device can limit, by preconfiguring different time ranges, a time range for a terminal device type within which a terminal device is barred from accessing the network device. This also facilitates load balancing of the network device. Alternatively, the network device may define different time ranges for different terminal devices in different application scenarios, to meet the load balancing requirement of the network device. If the first terminal device detects that the network device does not support access of the first terminal device, the first terminal device does not attempt to access the network device, or does not attempt to access the network device within a preset time period. This reduces energy consumption of the terminal device.

In an optional implementation, the at least one piece of first information includes one bit. A first bit state of the one bit indicates that access of the first terminal device is not supported. A second bit state of the one bit indicates that access of the first terminal device is allowed, and the first terminal device receives information based on the first resource.

In an optional implementation, the at least one piece of first information includes one bit. A first bit state of the one bit indicates that the first terminal device receives information based on the first resource. A second bit state indicates that the first terminal device receives information based on the second resource.

In an optional implementation, the at least one piece of first information includes two bits. A first bit state of the two bits indicates that access of the first terminal device is not allowed. A second bit state of the two bits indicates that access of the first terminal device is allowed, and the first terminal device receives information based on the first resource. A third bit state of the two bits indicates that access of the first terminal device is allowed, and the first terminal device receives information based on the second resource. A fourth bit state of the two bits indicates that access of the first terminal device is allowed, and the first terminal device receives information based on the third resource.

In an optional implementation, the at least one piece of first information includes two bits. A first bit state of the two bits indicates that the network device supports access of the first terminal device. A second bit state of the two bits indicates that the network device does not support access of the first terminal device. A third bit state of the two bits indicates that access of the first terminal device is allowed, and the first terminal device receives information based on the first resource. A fourth bit state indicates that access of the first terminal device is allowed, and the first terminal device receives information based on the second resource.

In an optional implementation, at least one bit state of the at least one piece of first information indicates one or more of time domain position information, frequency domain position information, code domain position information, a resource index, a time domain resource offset, a frequency domain resource offset, a code domain resource offset, a power configuration, or a beam resource of the first resource, the second resource, or the third resource.

In an optional implementation, the first resource is a control resource set, a random access resource, or a synchronization information resource, the second resource and the third resource have different time domain position information, frequency domain position information, code domain position information, resource indexes, time domain resource offset values, frequency domain resource offset values, code domain resource offset values, power configurations, or beam resources from those of the first resource.

In an optional implementation, the first information may further indicate search space and/or a control channel parameter of the first terminal device.

In an optional implementation, the at least one piece of first information includes one or more bits. The at least one piece of first information indicates one or more of the following:
access of the first terminal device is not supported, and access of a second terminal device is not supported;
access of the first terminal device is not supported, and access of a second terminal device is supported;
access of the first terminal device is supported, and access of a second terminal device is not supported;
access of the first terminal device is not allowed, and access of a second terminal device is not allowed;
access of the first terminal device is not allowed, and access of a second terminal device based on the first resource is allowed;
access of the first terminal device is not allowed, and access of a second terminal device based on the second resource is allowed;
access of the first terminal device based on the first resource is allowed, and access of a second terminal device is not allowed;
access of the first terminal device based on the second resource is allowed, and access of a second terminal device is not allowed;
access of the first terminal device is allowed, access of a second terminal device is allowed, and access of the first terminal device and the second terminal device is based on the first resource; and
access of the first terminal device is allowed, access of a second terminal device is allowed, access of the first terminal device is based on the first resource, and access of the second terminal device is based on the second resource.

The second terminal device and the first terminal device have different first features, and the first resource and the second resource are different. The first feature may include one or more of a quantity of resources supported or configured by the terminal device, a quantity of transmit antenna ports and/or a quantity of receive antenna ports, a quantity of radio frequency channels, a quantity of HARQ processes, a supported peak rate, an application scenario, a latency requirement, and a processing capability. The quantity of resources may be a quantity of RBs, REs, subcarriers, RB groups, REG bundles, control channel elements, subframes, radio frames, slots, mini-slots, and/or symbols. In the foregoing implementation, when there are two or more terminal devices with different first features in the communication system, or it is understood that there are two types of terminal devices in the communication system, the network device may indicate, by using the at least one piece of first information, whether access of a first-type terminal device is allowed and/or whether access of a second-type terminal device is allowed. Further, resources corresponding to access of two types of terminal devices to the network device may be the same or may be different. This indication manner is more flexible.

In an optional implementation, at least one bit state of the at least one piece of first information indicates one or more of time domain position information, frequency domain position information, code domain position information, a resource index, a time domain resource offset, a frequency domain resource offset, a code domain resource offset, a power configuration, or a beam resource of the first resource or the second resource.

In an optional implementation, the first resource is a control resource set, a random access resource, or a synchronization information resource, the second resource has different time domain position information, frequency domain position information, code domain position information, resource indexes, time domain resource offset values, frequency domain resource offset values, code domain resource offset values, power configurations, or beam resources from those of the first resource. In the foregoing manner, the network device may configure two or more types of resources for access of the first-type terminal device and/or the second-type terminal device.

In an optional implementation, the at least one piece of first information is included in a master information block MIB. Alternatively, the at least one piece of first information is included in downlink control information DCI. Alternatively, the at least one piece of first information is included in a system information block SIB.

In an optional implementation, a communication frequency between the first terminal device and the network device is within a frequency range 1. The at least one piece of first information is included in the master information block MIB. Alternatively, a communication frequency between the first terminal device and the network device is within a frequency range 2. The at least one piece of first information is included in the downlink control information DCI or the system information block SIB. In the foregoing implementation, available bits of different frequency ranges are used to better adapt to scenarios of different frequency ranges.

In an optional implementation, one piece of first information in the at least one piece of first information is included in a master information block MIB. Another piece of first information in the at least one piece of first information is included in downlink control information or a system information block.

In an optional implementation, a communication frequency between the first terminal device and the network device is within a frequency range 2.

In an optional implementation, a frequency within the frequency range 1 is less than a first frequency, a frequency within the frequency range 2 is greater than the first frequency, and the first frequency is 7125 MHz.

In an optional implementation, a frequency within the frequency range 1 is between 410 MHz and 7125 MHz, and a frequency within the frequency range 2 is greater than 24250 MHz.

In an optional implementation, the at least one piece of first information includes one piece of first information. The one piece of first information indicates the first access capability and/or the first access permission. Alternatively, the at least one piece of first information includes two pieces of first information. One piece of first information indicates the first access capability, and the other piece of first information indicates the first access permission.

In an optional implementation, the first information is included in a master information block or a system information block 1. The at least one piece of first information includes one or more bits in a field reserved for operator use cellReservedForoperatorUse, a field reserved for other use cellReservedForOtherUse, and/or a field reserved for compatibility cellReservedForFutureUse. The at least one piece of first information indicates whether the network device supports access of the first terminal device. If the at least one piece of first information indicates that the network device supports access of the first terminal device, cellReservedForoperatorUse, cellReservedForOtherUse, or cellReservedForFutureUse is not applied to the first terminal device.

According to a second aspect, this application provides a communication method. The method may be performed by a network device, or may be performed by a chip in a network device. The following provides descriptions by using an example in which the method is performed by the network device. The network device determines whether access of a first terminal device is supported and/or whether access of the first terminal device is allowed. The network device sends at least one piece of first information to the terminal device. The at least one piece of first information indicates at least one of a first access capability and first access permission. The first access capability indicates whether the network device supports access of the first terminal device. The first access permission indicates whether the network device allows access of the first terminal device.

Based on this solution, the network device determines, based on a hardware capability, a software capability, or a performance indicator, whether access of the first terminal device is supported. The network device determines, based on a quantity of terminal devices that has accessed a cell and a load balancing requirement, whether to allow the first terminal device to access the network device. The first terminal device determines, by using the at least one piece of first information, whether the network device is capable of supporting access of the first terminal device and/or whether the network device allows access of the first terminal device. When the network device does not support access of the first terminal device, the network device does not have a capability for access of a terminal device of a terminal device type to which the first terminal device belongs. When the network device does not allow access of the first terminal device, the network device has a capability for access of the first terminal device, but does not allow access of the first terminal device.

In an optional implementation, the at least one piece of first information includes one or more bits. The at least one piece of first information indicates one or more of the following:
access of the first terminal device is not supported;
access of the first terminal device is not allowed;
access of the first terminal device is allowed, and the first terminal device receives information based on a first resource;
access of the first terminal device is allowed, and the first terminal device receives information based on a second resource;
access of the first terminal device is allowed, and the first terminal device receives information based on a third resource;
access of the first terminal device is not allowed within a first time range;
access of the first terminal device is not allowed within a second time range; and
access of the first terminal device is not allowed within a third time range.

The first resource, the second resource, and the third resource are different resources. The first time range, the second time range, and the third time range are three different time ranges. In the foregoing implementation, the network device may configure three or more types of resources for access of the first terminal device. The first terminal device determines, based on the at least one piece of first information, a resource based on which the first terminal device accesses the network device, or referred to as a resource based on which the first terminal device receives information sent by the network device and/or sends information to the network device. The network device more flexibly indicates a resource corresponding to access of the first terminal device to the network device. This avoids resource congestion caused by an excessive quantity of terminal devices that access the network device based on a same resource, and meets a load balancing requirement when the first terminal device accesses the network device. The network device can limit, by preconfiguring different time ranges, a time range for a terminal device type within which a terminal device is barred from accessing the network device. This also facilitates load balancing of the network device. Alternatively, the network device may define different time ranges for different terminal devices in different application scenarios, to meet the load balancing requirement of the network device.

In an optional implementation, the at least one piece of first information includes one bit. A first bit state of the one bit indicates that access of the first terminal device is not supported. A second bit state of the one bit indicates that access of the first terminal device is allowed, and the first terminal device receives information based on the first resource.

In an optional implementation, the at least one piece of first information includes one bit. A first bit state of the one bit indicates that the first terminal device receives information based on the first resource. A second bit state indicates that the first terminal device receives information based on the second resource.

In an optional implementation, the at least one piece of first information includes two bits. A first bit state of the two bits indicates that access of the first terminal device is not allowed. A second bit state of the two bits indicates that access of the first terminal device is allowed, and the first terminal device receives information based on the first resource. A third bit state of the two bits indicates that access of the first terminal device is allowed, and the first terminal device receives information based on the second resource. A fourth bit state of the two bits indicates that access of the first terminal device is allowed, and the first terminal device receives information based on the third resource.

In an optional implementation, the at least one piece of first information includes two bits. A first bit state of the two bits indicates that the network device supports access of the first terminal device. A second bit state of the two bits indicates that the network device does not support access of the first terminal device. A third bit state of the two bits indicates that access of the first terminal device is allowed, and the first terminal device receives information based on the first resource. A fourth bit state indicates that access of the first terminal device is allowed, and the first terminal device receives information based on the second resource.

In an optional implementation, the at least one piece of first information includes one bit. The first information is information included in a master information block or a system information block 1. Optionally, the at least one piece of first information is carried by at least one bit in a field reserved for operator use cellReservedForoperatorUse or at least one bit in a field reserved for other use cellReservedForOtherUse. Alternatively, the first information is carried by at least one bit in a field reserved for compatibility cellReservedForFutureUse. In this case, the at least one piece of first information is first-type terminal device specific information. The specific information may be understood as information that only a first-type terminal device can interpret. A terminal device of another type cannot interpret the specific information. The first-type terminal device has the same first feature as the first terminal device.

In an optional implementation, at least one bit state of the at least one piece of first information indicates one or more of time domain position information, frequency domain position information, code domain position information, a resource index, a time domain resource offset, a frequency domain resource offset, a code domain resource offset, a power configuration, or a beam resource of the first resource, the second resource, or the third resource.

In an optional implementation, the first resource is a control resource set, a random access resource, or a synchronization information resource, the second resource and the third resource have different time domain position information, frequency domain position information, code domain position information, resource indexes, time domain resource offset values, frequency domain resource offset values, code domain resource offset values, power configurations, or beam resources from those of the first resource.

In an optional implementation, the first information may further indicate search space and/or a control channel parameter of the first terminal device.

In an optional implementation, the at least one piece of first information includes one or more bits. The at least one piece of first information indicates one or more of the following:
access of the first terminal device is not supported, and access of a second terminal device is not supported;
access of the first terminal device is not supported, and access of a second terminal device is supported;
access of the first terminal device is supported, and access of a second terminal device is not supported;
access of the first terminal device is not allowed, and access of a second terminal device is not allowed;
access of the first terminal device is not allowed, and access of a second terminal device based on the first resource is allowed;
access of the first terminal device is not allowed, and access of a second terminal device based on the second resource is allowed;
access of the first terminal device based on the first resource is allowed, and access of a second terminal device is not allowed;
access of the first terminal device based on the second resource is allowed, and access of a second terminal device is not allowed;
access of the first terminal device is allowed, access of a second terminal device is allowed, and access of the first terminal device and the second terminal device is based on the first resource; and
access of the first terminal device is allowed, access of a second terminal device is allowed, access of the first terminal device is based on the first resource, and access of the second terminal device is based on the second resource.

The second terminal device and the first terminal device have different first features, and the first resource and the second resource are different. The first feature may include one or more of a quantity of resources supported or configured by the terminal device, a quantity of transmit antenna ports and/or a quantity of receive antenna ports, a quantity of radio frequency channels, a quantity of HARQ processes, a supported peak rate, an application scenario, a latency requirement, and a processing capability. The quantity of resources may be a quantity of RBs, REs, subcarriers, RB groups, REG bundles, control channel elements, subframes, radio frames, slots, mini-slots, and/or symbols. In the foregoing implementation, when there are two or more terminal devices with different first features in the communication system, or it is understood that there are two types of terminal devices in the communication system, the network device may indicate, by using the at least one piece of first information, whether access of a first-type terminal device is allowed and/or whether access of a second-type terminal device is allowed. Further, resources corresponding to access of two types of terminal devices to the network device may be the same or may be different. This indication manner is more flexible.

In an optional implementation, at least one bit state of the at least one piece of first information indicates one or more of time domain position information, frequency domain position information, code domain position information, a resource index, a time domain resource offset, a frequency domain resource offset, a code domain resource offset, a power configuration, or a beam resource of the first resource or the second resource.

In an optional implementation, the first resource is a control resource set, a random access resource, or a synchronization information resource, the second resource and the third resource have different time domain position information, frequency domain position information, code domain position information, resource indexes, time domain resource offset values, frequency domain resource offset values, code domain resource offset values, power configurations, or beam resources from those of the first resource.

In the foregoing manner, the network device may configure two or more types of resources for access of the first-type terminal device and/or the second-type terminal device.

In an optional implementation, the at least one piece of first information is included in a master information block MIB. Alternatively, the at least one piece of first information is included in downlink control information DCI. Alternatively, the at least one piece of first information is included in a system information block SIB.

In an optional implementation, a communication frequency between the first terminal device and the network device is within a frequency range 1. The at least one piece of first information is included in the master information block MIB. Alternatively, a communication frequency between the first terminal device and the network device is within a frequency range 2. The at least one piece of first information is included in the downlink control information DCI or the system information block SIB. In the foregoing implementation, available bits of different frequency ranges are used to better adapt to scenarios of different frequency ranges.

In an optional implementation, one piece of first information in the at least one piece of first information is included in a master information block MIB. Another piece of first information in the at least one piece of first information is included in downlink control information or a system information block.

In an optional implementation, a communication frequency between the first terminal device and the network device is within a frequency range 2.

In an optional implementation, a frequency within the frequency range 1 is less than a first frequency, a frequency within the frequency range 2 is greater than the first frequency, and the first frequency is 7125 MHz.

In an optional implementation, a frequency within the frequency range 1 is between 410 MHz and 7125 MHz, and a frequency within the frequency range 2 is greater than 24250 MHz.

In an optional implementation, the at least one piece of first information includes one piece of first information. The one piece of first information indicates the first access capability and/or the first access permission. Alternatively, the at least one piece of first information includes two pieces of first information. One piece of first information indicates the first access capability, and the other piece of first information indicates the first access permission.

In an optional implementation, the first information is included in a master information block or a system information block 1. The at least one piece of first information includes one or more bits in a field reserved for operator use cellReservedForoperatorUse, a field reserved for other use cellReservedForOtherUse, and/or a field reserved for compatibility cellReservedForFutureUse. The at least one piece of first information indicates whether the network device supports access of the first terminal device. If the at least one piece of first information indicates that the network device supports access of the first terminal device, cellReservedForoperatorUse, cellReservedForOtherUse, or cellReservedForFutureUse is not applied to the first terminal device.

According to a third aspect, this application provides a communication apparatus. For beneficial effect, refer to descriptions in the first aspect. Details are not described herein again. The communication apparatus includes at least one processor and an interface circuit. The interface circuit is configured to provide input or output of instructions and/or data for the at least one processor. Optionally, the communication apparatus further includes a memory. The memory is configured to store a computer program or the instructions. The at least one processor is coupled to the memory and the interface circuit. When the at least one processor executes the computer program or the instructions, the communication apparatus performs the method performed by the network device in the foregoing method.

According to a fourth aspect, this application provides a communication apparatus. For beneficial effect, refer to descriptions in the second aspect. Details are not described herein again. The communication apparatus includes at least one processor and an interface circuit. The interface circuit is configured to provide input or output of instructions and/or data for the at least one processor. Optionally, the communication apparatus further includes a memory. The memory is configured to store a computer program or the instructions. The at least one processor is coupled to the memory and the interface circuit. When the at least one processor executes the computer program or the instructions, the communication apparatus performs the method performed by the terminal device in the foregoing method.

According to a fifth aspect, a computer program product is provided. The computer program product includes computer program code. When the computer program code is run, the method performed by the terminal device in the foregoing aspects is performed.

According to a sixth aspect, a computer program product is provided. The computer program product includes computer program code. When the computer program code is run, the method performed by the network device in the foregoing aspects is performed.

According to a seventh aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete component.

According to an eighth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to a ninth aspect, this application provides a computer-readable storage medium. The computer-readable storage medium stores a computer program. When the computer program is run, the methods performed by the terminal device in the foregoing aspects are implemented.

According to a tenth aspect, this application provides a computer-readable storage medium. The computer-readable storage medium stores a computer program. When the computer program is run, the methods performed by the network device in the foregoing aspects are implemented.

### BRIEF DESCRIPTION OF DRAWINGS

The following describes in more details embodiments of the present invention with reference to accompanying drawings.
FIG. 1 is a schematic diagram of a possible application scenario according to an embodiment of the present invention;
FIG. 2 is a schematic flowchart of an indication method according to this application;
FIG. 3 is a schematic flowchart of another indication method according to this application;
FIG. 4 is a schematic flowchart of still another indication method according to this application;
FIG. 5 is a schematic flowchart of yet another indication method according to this application;
FIG. 6 is a schematic diagram of a structure of a communication apparatus according to this application;
FIG. 7 is a schematic diagram of a structure of a network device according to this application;
FIG. 8 is a schematic diagram of a structure of a terminal device according to this application; and
FIG. 9 is a schematic diagram of a chip according to this application.

### DESCRIPTION OF EMBODIMENTS

A network architecture and a service scenario described in embodiments of the present invention are intended to describe technical solutions of embodiments of the present invention more clearly, and do not constitute a limitation on the technical solutions provided in embodiments of the present invention. A person of ordinary skill in the art may know: With evolution of the network architecture and emergence of new service scenarios, the technical solutions provided in embodiments of the present invention are also applicable to similar technical problems.

In embodiments of the present invention, "a plurality of" means two or more than two. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

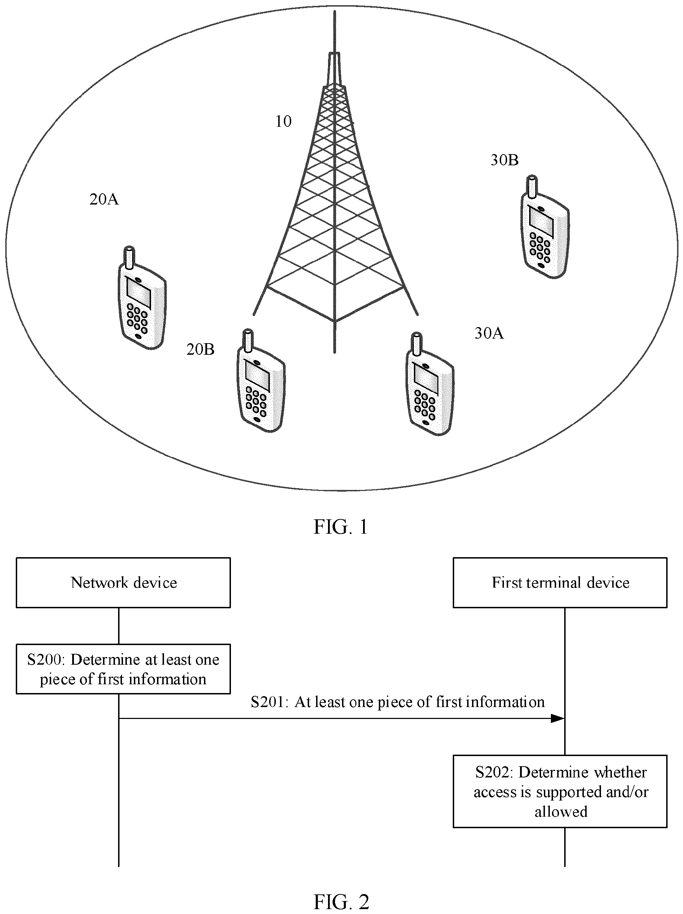

FIG. 1 is a schematic diagram of a possible application scenario according to an embodiment of the present invention. A communication system in this application scenario includes a network device 10 and at least two types of terminal devices 20 and 30. The network device may communicate with the at least two types of terminal devices by using one or more air interface technologies.

To access an NR network, a terminal device needs to perform a cell search, obtain system information, and perform random access. The terminal learns of information about a cell based on system information of the cell, to ensure that the terminal can correctly work in the cell after accessing the cell. In a process of the cell search, the terminal device needs to search for a synchronization signal block (SS/PBCH Block, SSB). The synchronization signal block includes a primary synchronization signal (Primary Synchronization Signal, PSS), a secondary synchronization signal (Secondary Synchronization Signal, SSS), a demodulation reference signal (Demodulation reference signal, DMRS), and a physical broadcast channel (Physical broadcast channel, PBCH). The UE can obtain, based on the SSB, downlink synchronization, physical-layer cell identity (physical-layer cell identity, PCI), and new system information of the cell.

For a cell, system information of the cell is valid for all terminal devices in the cell. It may be understood that the system information is at a cell level. The system information may be classified into a master information block (Master Information Block, MIB) and a plurality of system information blocks (System Information Block, SIB). After completing SSB decoding, the terminal device obtains MIB information. The MIB information includes a field PDCCH-ConfigSIB 1 indicating a control information configuration parameter for scheduling an SIB 1. The terminal device obtains information about the SSB and a control resource set based on the PDCCH-ConfigSIB1 by looking up a table, to obtain a location of a physical downlink control channel (Physical Downlink Control Channel, PDCCH). The PDCCH is used to schedule a physical downlink shared channel (Physical Downlink Shared Channel, PDSCH). The terminal device decodes the PDSCH and obtains information indicated by the SIB 1.

It can be learned from the foregoing description that the MIB and the SIB 1 are necessary information for access of the terminal device to the cell. Because the MIB information is at the cell level, the network device may indicate, based on the MIB information, that the terminal device is barred from accessing the cell. However, in the conventional technology, when there are two or more types of terminal devices in the cell, the network device cannot allow only a specific type of terminal device to access the cell, and does not allow another type of terminal device to access the cell. In addition, the network device may not be capable of supporting some types of terminal devices. In this case, when blindly attempting to access the cell, the terminal device cannot successfully access the cell, and causes power consumption.

In view of this, this application provides an access method. A principle of the method is as follows: A network device configures at least one piece of first information, to indicate whether the network device is capable of supporting access of a terminal device of a new type, and/or whether the network device allows access of the terminal device of the new type. In this way, when there are two or more types of terminal devices in the communication system, access information of at least two types of terminal devices can be flexibly indicated.

Based on a process in which a terminal device accesses a cell, the following explains words or terms that may appear in embodiments of the present invention. The words or terms are also a part of content of the present invention.

### 1. Master information block (Master Information Block, MIB)

The MIB is carried on a physical broadcast channel PBCH. For a cell, the MIB includes reference and scheduling information of many system information blocks of the cell. An MIB message carries most basic information, and the information is related to PDSCH decoding. The terminal device can continue to decode data in a PDSCH based on a parameter in an MIB only after decoding the MIB. In the conventional technology, MIB information includes a cellbarred (CellBarred) field, to indicate whether a terminal device is allowed to access the cell. The MIB information further includes a one-bit spare (Spare) field, and does not indicate any information.

In an existing protocol, if a maximum quantity of SSBs in one SSB period is equal to 64, three bits in a PBCH field indicates an index of an SSB. When a maximum quantity of SSBs in one SSB period is less than 64, only one bit in a PBCH field indicates an index of an SSB. In this case, two bits are reserved.

### 2. System information block (System Information Block, SIB)

The SIB includes a system information element. One SIB combines system information elements with a same property, and different SIBs may have different features. The SIB is included in a PDSCH, which is scheduled by a corresponding PDCCH.

### 3. Physical downlink control channel (Physical Downlink Control Channel, PDCCH)

The PDCCH is used to carry downlink control information (Downlink Control Information, DCI). The PDCCH includes one or more control channel elements (control-channel element, CCE), and a quantity of CCEs included in the PDCCH is determined by an aggregation level (Aggregation level). The aggregation level and the quantity of CCEs included in the PDCCH may be shown in Table 1.

**Table 1**

| Aggregation level | Quantity of CCEs |
|---|---|
| 1 | 1 |
| 2 | 2 |
| 4 | 4 |
| 8 | 8 |
| 16 | 16 |

### 4. Control resource set CORESET (Control Resource Set, CORESET)

The control resource set indicates a set of time-frequency resources carrying a PDCCH. A control resource set includes several resource blocks (Resource Block, RB) in frequency domain and several symbols in time domain. One terminal device may correspond to a plurality of control resource sets. Each control resource set can be bound to only one mapping relationship between a CCE and a resource element group (Resource Element Group, REG). The REG is a basic unit for PDCCH resource mapping. One REG is defined as one RB on one OFDM symbol. One RB is defined as 12 consecutive subcarriers in frequency and one OFDM symbol in time domain. An REG bundle is a new concept introduced in NR. REGs first form an REG bundle through a time-first (Time-First, T-F for short) mapping, and then is mapped to a control resource in an interleaved or non-interleaved manner at a granularity of the REG bundle. One REG bundle includes a group of REGs that are consecutive in time domain and/or frequency domain. A size of one REG bundle is equal to a size of an REG occupied in frequency domain multiplied by a size of an OFDM symbol occupied in time domain.

For the pdcch-ConfigSIB 1 in the MIB information, different pdcch-ConfigSIB 1 status values correspond to information about different control resource sets. The terminal device obtains, based on the pdcch-ConfigSIB1, a time-frequency range within which a PDCCH may appear, and detects, through blind monitoring, all locations in which the PDCCH may appear until the PDCCH is successfully decoded.

### 5. Network device

The network device may be a base station, an access point, an access network device, or a device that is in an access network and that communicates with a wireless terminal through one or more sectors over an air interface. The network device may be configured to mutually convert a received over-the-air frame and an IP packet and serve as a router between the wireless terminal and a rest portion of the access network, where the rest portion of the access network may include an Internet protocol (IP) network. The network device may further coordinate attribute management of the air interface. For example, the network device may be a base transceiver station (Base Transceiver Station, BTS) in a global system for mobile communications (Global System for Mobile Communications, GSM) or code division multiple access (Code Division Multiple Access, CDMA), may be a NodeB (NodeB, NB) in wideband code division multiple access (Wideband Code Division Multiple Access, WCDMA), or may be an evolved NodeB (Evolved NodeB, eNB or eNodeB) in long term evolution (Long Term Evolution, LTE), a relay node, an access point, or a base station in a future 5G network, for example, a gNB. This is not limited herein. It should be noted that, in a 5G or NR system, there may be one or more transmission reception points (Transmission Reception Point, TRP) on one NR base station. All TRPs belong to a same cell, and each TRP and each terminal can use a measurement reporting method described in this embodiment of the present invention. In another scenario, the network device may be further divided into a control unit (Control Unit, CU) and a data unit (Data Unit, DU). There may be a plurality of DUs under one CU. The measurement reporting method described in embodiments of this application may be used for each DU and the terminal. A difference between a CU-DU separation scenario and a multi-TRP scenario lies in that a TRP only serves as a radio frequency unit or an antenna device, but a DU may implement a protocol stack function, for example, the DU may implement a physical layer function.

### 6. Terminal device

The terminal device may be a wireless terminal or a wired terminal. The wireless terminal may refer to a device that provides a user with voice and/or other service data connectivity, a handheld device with a wireless connection function, or another processing device connected to a wireless modem. The wireless terminal may communicate with one or more core networks through a radio access network (Radio Access Network, RAN). The wireless terminal may be a mobile terminal, for example, a mobile phone (which is also referred to as a "cellular" phone) or a computer having a mobile terminal, for example, may be a portable, pocket-sized, handheld, computer built-in, or in-vehicle mobile apparatus, which exchanges a voice and/or data with the radio access network. For example, it may be a device such as a personal communication service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile (Mobile), a remote station (Remote Station), a remote terminal (Remote Terminal), an access terminal (Access Terminal), a user terminal (User Terminal), a user agent (User Agent), a user device (User Device or User Equipment). This is not limited herein.

### 7. Reduced capability (Reduced Capability, REDCAP) terminal device

In a new radio (New Radio, NR) communication system, the REDCAP terminal device needs to be supported in an application scenario. The REDCAP terminal device usually has a narrower bandwidth, a smaller quantity of antenna ports, a lower processing capability, a longer processing time period, and/or a lower transmission rate, and the like. In addition, the REDCAP terminal device has a longer battery life, lower processing complexity, and/or lower costs.

### 8. Radio network temporary identifier (Radio Network Temporary Identifier, RNTI)

The RNTI is configured by a network device, and identifies a terminal device in a connected mode in a cell, a group of terminal devices in a paging scenario, and/or a special radio channel. In a working principle, different types of RNTIs scramble a cyclic redundancy check (Cyclic Redundancy Check, CRC) part of downlink control information (Downlink Control Information, DCI) of a radio channel. The DCI is included in a physical downlink control channel (Physical Downlink Control Channel, PDCCH).

### 9. Modulation and coding scheme (Modulation and Coding Scheme, MCS)

The MCS modulation and coding table is a representation form provided in 802.11n to represent a communication rate of a WLAN. NR rate matching is implemented based on an MCS index value. Each MCS index corresponds to a group of a modulation order, a target code rate, and spectral efficiency. The MCS index is indicated by using DCI. The PDSCH carrying an SIB 1 is scheduled by using DCI scrambled with a system information (System Information) wireless network temporary identifier (SI-RNTI for short). In this case, there are some reserved spare bits, and the spare bits are 15 bits or 17 bits. In the following embodiments, a first field represents the spare bits.

In an existing protocol, for DCI scrambled with a paging radio network temporary identifier P-RNTI, a random access radio network temporary identifier RA-RNTI, and an SI-RNTI, a modulation order needs to be less than or equal to 2.

The DCI includes five bits indicating an MCS index value. When an indication range of the MCS index is 0 to 9, a corresponding modulation order is 2. When an indication range of the MCS index is 10 to 16, a modulation order is 4. When an indication range of the MCS index is 17 to 28, a modulation order is 6. When an indication range of the MCS index is 29, 30, and 31, modulation orders are 2, 4, and 6 respectively. When the MCS index values are 0 to 28, each index value is corresponding to a code rate and spectral efficiency. When the MCS index values are 29 to 31, the MCS index values are in a reserved state, and no code rate or spectral efficiency is indicated temporarily. Therefore, for a PDSCH carrying the SIB 1, DCI of the PDSCH is scheduled.

When the indicated modulation order does not exceed 2, correspondingly, a range of the MCS index value is also 0 to 9. In this case, statuses of the 5-bit field indicating the MCS index value are 0000 to 01001, and a most significant bit of the indication field of the MCS index value is 0.

### 10. Frequency range (Frequency Range, FR)

A frequency range is also referred to as a frequency band. In an NR system, a frequency in FR1 ranges from 410 MHz to 7125 MHz, and a frequency in FR2 is greater than 24250 MHz.

The technical solutions provided in this application may be applied to various communication systems, for example, may be applied to a fifth generation (5th generation mobile networks, 5G) communication system, a future evolved system, or a plurality of converged communication systems. The technical solutions provided in this application may be applied to a plurality of application scenarios of the foregoing communication systems, for example, an industrial wireless sensor network (Industrial Wireless Sensor Network, IWSN) and video surveillance (Video surveillance). The technical solutions that may be provided in this application may support a plurality of terminal device types, for example, the REDCAP terminal device, including an industrial wireless sensor, a video surveillance camera, or a wearable device (smart watch).

To make a person skilled in the art understand the technical solutions in embodiments of the present invention better, the following clearly and completely describes the technical solutions in embodiments of the present invention with reference to the accompanying drawings in embodiments of the present invention. It is clear that the described embodiments are merely some rather than all of embodiments of the present invention. All other embodiments obtained by a person of ordinary skill in the art based on embodiments of the present invention without creative efforts shall fall within the protection scope of the present invention.

FIG. 2 is a schematic flowchart of an access information indication method according to this application. The method may be performed by a terminal device and a network device, or may be performed by a chip in a terminal device and a chip in a network device. A network device in FIG. 2 may be the access network device 10 in FIG. 1, and a terminal device may be the terminal device 20 in FIG. 1. The method shown in FIG. 2 may include the following operations.

Optionally, S200: The network device determines at least one piece of first information.

Specifically, the network device determines the at least one piece of first information based on types of terminal devices in a cell, a quantity of terminal devices in the cell, and/or resource allocation for the terminal devices in the cell. The at least one piece of first information indicates at least one of a first access capability and first access permission, the first access capability is whether the network device supports access of a first terminal device, and the first access permission is whether the network device allows access of the first terminal device.

Optionally, the at least one piece of first information is included in a master information block MIB, a system information block SIB, or downlink control information; or one piece of the at least one piece of first information is included in a MIB, and the other piece of first information is included in an SIB or downlink control information. Optionally, the downlink control information is used to schedule a dedicated system information block SIB 1.

Optionally, the at least one piece of first information may include one or more bits.

S201: The network device sends the at least one piece of first information to the first terminal device; and correspondingly, the first terminal device receives the at least one piece of first information from the network device.

Specifically, the at least one piece of first information includes the one or more bits. There are correspondences between different bit states of the at least one piece of first information and whether the network device allows access of the first terminal device and/or supports access of the first terminal device. When the network device does not support access of the terminal device, it may be understood that the network device does not have a capability for access of the first terminal device. When the network device does not allow access of the first terminal device, it may be understood that the network device has the capability for access of the first terminal device, but does not allow access of the first terminal device. For example, for a cell, because there are a large quantity of terminal devices accessing the cell, for a purpose of load balancing, the network device does not allow the first terminal device to access the cell.

S202: Determine whether the network device supports access of the first terminal device and/or allows access of the first terminal device.

Specifically, the first terminal device determines, based on the at least one piece of first information, whether the network device supports access of the first terminal device and/or allows access of the first terminal device.

Optionally, there may be correspondences between the different bit states of the at least one piece of first information and resource information corresponding to access of the first terminal device to the network device. The first terminal device accesses the network device, and receives information based on a corresponding resource. Optionally, the information received by the first terminal device based on the corresponding resource may be a PDSCH, a PDCCH and/or the SIB 1.

Specifically, the resource corresponding to access of the first terminal device to the network device may be a first resource, a second resource, or a third resource. The resource information corresponding to the first terminal device may be one or more of time domain position information, frequency domain position information, code domain position information, a resource index, a time domain resource offset, a frequency domain resource offset, a code domain resource offset, a power configuration, or a beam resource of the first resource, the second resource, or the third resource. The first resource, the second resource, and the third resource are three different resources. Optionally, the first resource is a control resource set, a random access resource, or a synchronization information resource. The first resource, the second resource, and the third resource have different resource information, and the resource information is at least one of the following: the time domain position information, the frequency domain position information, the code domain position information, the resource index, the power configuration, the beam resource, the time domain resource offset value, the frequency domain resource offset value, or the code domain resource offset value.

Optionally, the first resource includes one or more resource elements in the second resource. The resource element may be an RB, an RE, a subcarrier, an RB group, an REG bundle, a control channel element, a subframe, a radio frame, a slot, a mini-slot, a symbol, and/or the like. In this case, one or more overlapping resource elements in the first resource element and the second resource element may be in a relationship of time division multiplexing, frequency division multiplexing, or code division multiplexing. Alternatively, the first resource is different from the second resource, and a resource element in the first resource is completely independent of a resource element in the second resource.

Optionally, the third resource includes one or more resource elements in the second resource and/or the first resource. The resource element may be an RB, an RE, a subcarrier, an RB group, an REG bundle, a control channel element, a subframe, a radio frame, a slot, a mini-slot, a symbol, and/or the like. In this case, one or more overlapping resource elements in the third resource and the first resource element and/or the second resource element may be in a relationship of time division multiplexing, frequency division multiplexing, or code division multiplexing. Alternatively, the third resource is different from both the first resource and the second resource, and a resource element in the third resource is completely independent of the resource element in the first resource or the resource element in the second resource.

Optionally, for the first resource, the time domain resource offset, the frequency domain resource offset, and/or the code domain resource offset of the first resource may be relative to the second resource, or may be relative to the third resource. Similarly, the time domain resource offset, the frequency domain resource offset, and/or the code domain resource offset of the second resource may be relative to the first resource, or may be relative to the third resource. The time domain resource offset, the frequency domain resource offset, and/or the code domain resource offset of the third resource may be relative to the second resource, or may be relative to the first resource. Optionally, the resource offset value may be a preset value. For example, a resource offset value of the first resource is used as an example. The first resource is 1/2ⁿ of a resource quantity of the second resource or the third resource; and the resource quantity may be a quantity of RBs, a quantity of REs, a quantity of subcarriers, or the like. Alternatively, the resource offset value is a fixed bandwidth, for example, 100 MHz, 50 MHz, 25 MHz, 10 MHz, or 5 MHz. Alternatively, the resource offset value is a corresponding quantity of RBs, for example, 96 RBs, 48 RBs, 24 RBs, 12 RBs, or 6 RBs.

In an optional manner, the at least one piece of first information includes one bit. Optionally, in an FRI frequency band, the at least one piece of first information is included in a 1-bit indication field in the MIB. Alternatively, in an FR2 frequency band, the at least one piece of first information is included in the SIB 1 or a 1-bit indication field in downlink control information for scheduling the SIB 1.

Example 1: The 1-bit indication field corresponds to two status values. There are correspondences between the two status values and whether the network device supports the first terminal device to access a first cell. For example, a status value 0 indicates that the network device does not support access of the first terminal device, and a status value 1 indicates that the network device supports access of the first terminal device. When the network device does not support access of the terminal device, it may be understood that the network device does not have the capability for access of the first terminal device.

Example 2: The 1-bit indication field corresponds to the two status values, and there are correspondences between the two status values and whether the network device allows the first terminal device to access the first cell. For example, the status value 0 indicates that the network device does not allow the first terminal device to access the cell, and the status 1 indicates that the network device allows the first terminal device to access the cell.

Example 3: The 1-bit indication field corresponds to the two status values, and there are correspondences between the two status values and the resource information corresponding to access of the first terminal device to the network device. In this case, it may be understood that the at least one piece of first information indicates the resource information corresponding to access of the first terminal device to the network device when the network device supports and allows access of the first terminal device. For example, the status value 0 indicates that the first terminal device receives the information based on the first resource, and the status value 1 indicates that the first terminal device receives the information based on the second resource. Optionally, the at least one piece of first information is included in the downlink control information, and the downlink control information is used to schedule a data channel that carries the system information block 1.

Further optionally, the first resource is a common PDSCH, and the common PDSCH may be understood as a PDSCH that can be received by all terminal devices within coverage of the network device. The second resource is a dedicated PDSCH, and the dedicated PDSCH may be understood as a PDSCH that can be received by only a first-type terminal device. Alternatively, the first resource is a common SIB 1, and the common SIB 1 may be understood as an SIB 1 that can be received by all the terminal devices within the coverage of the network device. The second resource is a dedicated SIB 1, and the dedicated SIB 1 may be understood as an SIB 1 that can be received by only the first-type terminal device. The first-type terminal device is a terminal device that has a same first feature as the first terminal device.

Example 4: The 1-bit indication field corresponds to the two status values; a first-bit status indicates that access of the first terminal device is not supported; and a second-bit status of the 1-bit indicates that access of the first terminal device is allowed, and the first terminal device receives the information based on the first resource. Optionally, the at least one piece of first information is included in the MIB, and the first resource is a control resource set whose index is 0.

Example 5: The 1 bit is information included in the master information block or the system information block 1. Further optionally, the 1 bit is a cellReservedForoperatorUse field reserved for an operator, or the 1 bit is a cellReservedForOtherUse field reserved for other purposes, or the 1 bit is a cellReservedForFutureUse field reserved for compatibility. In this case, the at least one piece of first information is dedicated information of the first-type terminal device. The dedicated information may be understood as information that can be interpreted by only the first-type terminal device. In this case, another type of terminal device cannot interpret the dedicated information. The first-type terminal device has the same first feature as the first terminal device.

In an optional manner, the at least one piece of first information includes two bits. Optionally, in the FRI frequency band, the at least one piece of first information is included in a 2-bit indication field in the MIB; and in the FR2 frequency band, the at least one piece of first information is included in the SIB 1 or a 2-bit indication field in the downlink control information for scheduling the SIB 1. Further optionally, in the FRI frequency band, the two bits include one bit of spare in the MIB information and one bit in a field that is in a PBCH and that indicates an SSB index; or the two bits include two bits in a field that is in a PBCH and that indicates an SSB index.

Example 1: Correspondences between different status values of the at least one piece of first information and indication content may be shown in Table 2. The at least one piece of first information includes two bits, and corresponds to four status values. In this case, the different bit statuses of the at least one piece of first information may indicate whether the network device supports access of the first terminal device, allows access of the first terminal device, and the resource information corresponding to access of the first terminal device to the network device. The resource information includes one or more of the time domain position information, the frequency domain position information, the code domain position information, the resource index, the time domain resource offset, the frequency domain resource offset, the code domain resource offset, the power configuration, and the beam resource. Optionally, the resource information may be information about the first resource, the second resource, or the third resource.

**Table 2**

| | | | | |
|---|---|---|---|---|
| Status values of the at least one piece of first information | 00 | 01 | 10 | 11 |
| Whether the network device supports access of the first terminal device | No | Yes | Yes | Yes |
| Whether the network device allows access of the first terminal device | | No | Yes | Yes |
| Resource information corresponding to the first terminal device | | | P1 | P2 |

The status value 00 indicates, to the first terminal device, that the network device does not support access of the first terminal device. The status value 01 indicates, to the first terminal device, that the network device supports access of the first terminal device, but does not allow access of the first terminal device. The status value 10 indicates, to the first terminal device, that the network device supports and allows access of the first terminal device; and when the first terminal device accesses the network device, the resource information corresponding to the first terminal device is P1. The status value 11 indicates, to the first terminal device, that the network device supports and allows access of the first terminal device; and when the first terminal device accesses the network device, the resource information corresponding to the first terminal device is P2.

Optionally, P1 is one or more of the time domain position information, the frequency domain position information, the code domain position information, the resource index, the power configuration, and the beam resource of the first resource. P2 is one or more of the time domain position information, the frequency domain position information, the code domain position information, the resource index, the power configuration, and the beam resource of the second resource.

Optionally, P1 is an offset value between the first resource and the second resource in time domain, frequency domain, and/or code domain. P2 is another offset value between the first resource and the second resource in time domain, frequency domain, and/or code domain.

For example, P1 and P2 indicate two different offset values of the first resource and the second resource in time domain; or P1 and P2 indicate two different offset values of the first resource and the second resource in frequency domain; or P1 and P2 indicate two different offset values of the first resource and the second resource in code domain; or P1 indicates an offset value between the first resource and the second resource in time domain, and P2 indicates an offset value between the first resource and the second resource in frequency domain and/or code domain; or P1 indicates an offset value between the first resource and the second resource in frequency domain, and P2 indicates an offset value between the first resource and the second resource in time domain and/or code domain; or P1 indicates an offset value between the first resource and the second resource in code domain, and P2 indicates an offset value between the first resource and the second resource in time domain and/or frequency domain. It may be understood that the offset values indicated by P1 and P2 may be interchanged. This is not limited herein.

Example 2: The correspondences between the different status values of the at least one piece of first information and the indication content may be shown in Table 3. The at least one piece of first information includes two bits, and corresponds to four status values. In this case, the different status values of the at least one piece of first information may indicate whether the network device supports access of the first terminal device, allows access of the first terminal device, and the resource information corresponding to access of the first terminal device to the network device. The resource information includes one or more of the time domain position information, the frequency domain position information, the code domain position information, the resource index, the time domain resource offset, the frequency domain resource offset, the code domain resource offset, the power configuration, and the beam resource. Optionally, the resource information may be the information about the first resource, the second resource, or the third resource.

**Table 3**

| | | | | |
|---|---|---|---|---|
| Status values of the at least one piece of first information | 00 | 01 | 10 | 11 |
| Whether the network device supports access of the first terminal device | No | Yes | Yes | Yes |
| Whether the network device allows access of the first terminal device | | Yes | Yes | Yes |
| Resource information corresponding to the first terminal device | | P1 | P2 | P3 |

The status value 00 indicates, to the first terminal device, that the network device does not support access of the first terminal device. The status value 01 indicates, to the first terminal device, that the network device supports and allows access of the first terminal device; and when the first terminal device accesses the network device, the resource information of the first terminal device is P1. The status value 10 indicates, to the first terminal device, that the network device supports and allows access of the first terminal device; and when the first terminal device accesses the network device, the resource information of the first terminal device is P2. The status value 11 indicates, to the first terminal device, that the network device supports and allows access of the first terminal device; and when the first terminal device accesses the network device, the resource information of the first terminal device is P3. P1, P2, and P3 may be three different types of resource information.

Optionally, P1 is one or more of the time domain position information, the frequency domain position information, the code domain position information, the resource index, the power configuration, and the beam resource of the first resource. P2 is one or more of the time domain position information, the frequency domain position information, the code domain position information, the resource index, the power configuration, and the beam resource of the second resource. P3 is one or more of the time domain position information, the frequency domain position information, the code domain position information, the resource index, the power configuration, and the beam resource of the third resource.

Optionally, P1 is a first-type offset value between the first resource and the second resource in time domain, frequency domain, and/or code domain. P2 is a second-type offset value between the first resource and the second resource in time domain, frequency domain, and/or code domain. P3 is a third-type offset value between the first resource and the second resource in time domain, frequency domain, and/or code domain.

For example, P1, P2, and P3 indicate three different offset values of the first resource and the second resource in time domain; or P1, P2, and P3 indicate three different offset values of the first resource and the second resource in frequency domain; or P1, P2, and P3 indicate three different offset values of the first resource and the second resource in code domain; or P1 indicates an offset value between the first resource and the second resource in time domain, P2 indicates an offset value between the first resource and the second resource in frequency domain and/or code domain, and P3 indicates an offset value between the first resource and the second resource in time domain, frequency domain, and/or code domain; or P1 indicates an offset value between the first resource and the second resource in frequency domain, P2 indicates an offset value between the first resource and the second resource in time domain and/or code domain, and P3 indicates an offset value between the first resource and the second resource in time domain, frequency domain, and/or code domain; or P1 indicates an offset value between the first resource and the second resource in code domain, P2 indicates an offset value between the first resource and the second resource in time domain and/or frequency domain, and P3 indicates an offset value between the first resource and the second resource in time domain, frequency domain, and/or code domain. It may be understood that the offset values indicated by P1, P2, and P3 may be interchanged. This is not limited herein.

Example 3: The correspondences between the different status values of the at least one piece of first information and the indication content may be shown in Table 4. The at least one piece of first information includes two bits, and corresponds to four status values. The different status values of the at least one piece of first information may indicate the resource information corresponding to access of the first terminal device to the network device. In this case, it may be understood that the network device supports and allows access of the first terminal device. The resource information includes one or more of the time domain position information, the frequency domain position information, the code domain position information, the resource index, the time domain resource offset, the frequency domain resource offset, the code domain resource offset, the power configuration, and the beam resource. Optionally, the resource information may be the information about the first resource, the second resource, or the third resource.

**Table 4**

| | | | | |
|---|---|---|---|---|
| Status values of the at least one piece of first information | 00 | 01 | 10 | 11 |
| Whether the network device allows access of the first terminal device | Yes | Yes | Yes | Yes |
| Information about the first resource | P1 | P2 | P3 | P4 |

The status value 00 indicates, to the first terminal device, that the network device supports and allows access of the first terminal device; and when the first terminal device accesses the network device, the resource information of the first terminal device is P1. The status value 01 indicates, to the first terminal device, that the network device supports and allows access of the first terminal device; and when the first terminal device accesses the network device, the resource information of the first terminal device is P2. The status value 10 indicates, to the first terminal device, that the network device supports and allows access of the first terminal device; and when the first terminal device accesses the network device, the resource information of the first terminal device is P3. The status value 11 indicates, to the first terminal device, that the network device supports and allows access of the first terminal device; and when the first terminal device accesses the network device, the resource information of the first terminal device is P4. Specifically, the resource information corresponding to access of the first terminal device to the network device is the first resource, and P1, P2, P3, and P4 may be four different types of resource information.

Optionally, P1 is one or more of the time domain position information, the frequency domain position information, the code domain position information, the resource index, the power configuration, and the beam resource of the first resource. P2 is one or more of the time domain position information, the frequency domain position information, the code domain position information, the resource index, the power configuration, and the beam resource of the second resource. P3 is one or more of the time domain position information, the frequency domain position information, the code domain position information, the resource index, the power configuration, and the beam resource of the third resource. P4 is an offset value between the first resource and the second resource in time domain, frequency domain, and/or code domain; or P4 is an offset value between the third resource and the second resource in time domain, frequency domain, and/or code domain.

Optionally, P1 is a first-type offset value between the first resource and the second resource in time domain, frequency domain, and/or code domain. P2 is a second-type offset value between the first resource and the second resource in time domain, frequency domain, and/or code domain. P3 is a third-type offset value between the first resource and the second resource in time domain, frequency domain, and/or code domain. P4 is a fourth-type offset value between the first resource and the second resource in time domain, frequency domain, and/or code domain.

Example 4: The at least one piece of first information includes two bits. A first bit status of the two bits indicates that the network device supports access of the first terminal device; a second bit status of the two bits indicates that the network device does not support access of the first terminal device; a third bit status of the two bits indicates that access of the first terminal device is allowed, and the first terminal device receives the information based on the first resource; and a fourth bit status indicates that access of the first terminal device is allowed, and the first terminal device receives the information based on the second resource.

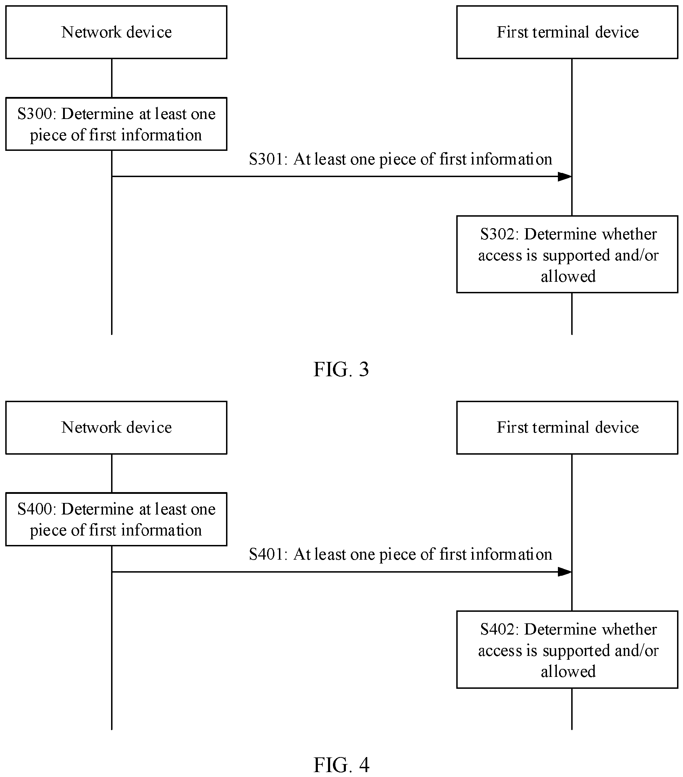

FIG. 3 is a schematic flowchart of an access information indication method according to this application. The method may be performed by a terminal device and a network device, or may be performed by a chip in a terminal device and a chip in a network device. A network device in FIG. 3 may be the access network device 10 in FIG. 1, and a terminal device may be the terminal device 20 in FIG. 1. The method shown in FIG. 3 may include the following operations.

S300: The network device determines at least one piece of first information.

Specifically, the at least one piece of first information indicates at least one of a first access capability and first access permission, the first access capability is whether the network device supports access of a first terminal device, and the first access permission is whether the network device allows access of the first terminal device.

Optionally, the at least one piece of first information is included in a system information block SIB or downlink control information for scheduling an SIB 1; or the at least one piece of first information is included in a system information SIB and downlink control information for scheduling an SIB 1.

Optionally, the at least one piece of first information includes one or more bits, a quantity of the one or more bits is N, and N is a positive integer.

S301: The network device sends the at least one piece of first information to the first terminal device; and correspondingly, the first terminal device receives the at least one piece of first information from the network device.

Specifically, the at least one piece of first information includes N bits. There are correspondences between different bit status values of the at least one piece of first information and whether the network device allows access of the first terminal device and/or supports access of the first terminal device.

S302: Determine whether the network device supports access of the first terminal device and/or allows access of the first terminal device.

Specifically, the first terminal device determines, based on the at least one piece of first information, whether the network device supports access of the first terminal device and/or allows access of the first terminal device.

Optionally, the different bit status values of the at least one piece of first information may further have a correspondence with resource information corresponding to access of the first terminal device to the network device, have a correspondence with whether the network device allows access of a second terminal device, and/or have a correspondence with resource information corresponding to access of the second terminal device to the network device. When the network device does not allow access of the first terminal device and/or the second terminal device, it may be understood that the network device has a capability for access of the first terminal device and/or the second terminal device, but does not allow access of the first terminal device and/or the second terminal. For example, for a cell, because there are a large quantity of terminal devices accessing the cell, for a purpose of load balancing, the network device does not allow the first terminal device and/or the second terminal to access the cell. When accessing the network device, the first terminal device and the second terminal device receive information based on a resource indicated by the at least one piece of first information. The information received based on the resource indicated by the at least one piece of first information may be a PDSCH, a PDCCH, and/or the SIB 1.

Specifically, that the first terminal device and the second terminal device have different first features may also be understood as that the first terminal device and the second terminal device belong to different device types. The first feature includes one or more of the following:
a bandwidth, a quantity of supported or configured resources, a quantity of transmit antenna ports and/or a quantity of receive antenna ports, a quantity of radio frequency channels, a quantity of hybrid automatic repeat request (hybrid automatic repeat request, HARQ) processes, a supported peak rate, an application scenario, a delay requirement, a processing capability, a protocol release, a duplex manner, a service, and the like. The following describes in detail the first feature.

The bandwidth, or a channel bandwidth, is a bandwidth supported or configured by the terminal device. A bandwidth of the first terminal device is different from that of the second terminal device. For example, the bandwidth of the first terminal device is 20 M, and the bandwidth of the second terminal device is 100 M.

The quantity of supported or configured resources may be an RB, an RE, a subcarrier, an RB group, an REG bundle, a control channel element, a subframe, a radio frame, a slot, a mini-slot, and/or a quantity of symbols. A quantity of resources supported or configured by the first terminal device is different from that of the second terminal device. For example, the quantity of resources supported by the first terminal device is 48 RBs, and the quantity of resources supported by the second terminal device is 96 RBs.

The quantity of transmit antenna ports and/or the quantity of receive antenna ports specially means that a quantity of transmit antenna ports and/or a quantity of receive antenna ports of the first terminal device is different from that/those of the second terminal device. For example, the quantity of transmit antenna ports of the first terminal device is 1, and the quantity of receive antenna ports of the first terminal device is 2; and the quantity of transmit antenna ports of the second terminal device is 2, and the quantity of receive antenna ports of the second terminal device is 4.

The quantity of radio frequency channels specially means that a quantity of radio frequency channels of the first terminal device is different from that of the second terminal device. For example, the quantity of radio frequency channels of the first terminal device is 1, and the quantity of radio frequency channels of the second terminal device is 2.

The quantity of HARQ processes specially means that a quantity of HARQ processes supported by the first terminal device is different from that supported by the second terminal device. For example, the quantity of HARQ processes supported by the first terminal device is 8, and the quantity of HARQ processes supported by the second terminal device is 16.

The supported peak rate specially means that a maximum peak rate of the first terminal device is different from that of the second terminal device. For example, the maximum peak rate supported by the first terminal device is 100 Mbps, and the peak rate supported by the second terminal device is 200 Mbps.

The application scenario specially means that the first terminal device and the second terminal device serve different application scenarios. For example, the first terminal device is applied to industrial wireless sensing, video surveillance, a wearable device, and the like; and the second terminal device is applied to mobile communication, video Internet access, and the like.

The delay requirement specially means that the first terminal device and the second terminal device have different transmission delay requirements. For example, a delay requirement of the first terminal device is 500 milliseconds, and a delay requirement of the second terminal device is 100 milliseconds.

The processing ability specially means that in different subcarrier space (subcarrier space, SCS) conditions, the first terminal device and the second terminal device have different channel or data processing time sequences and processing speeds. For example, the first terminal device does not support a complex operation, and the complex operation may include artificial intelligence (artificial intelligence, AI) and virtual reality (virtual reality, VR) rendering. The second terminal device supports the complex operation. It is understood that a processing capability of the first terminal device is lower than that of the second terminal device.

The protocol release specially means that the first terminal device and the second terminal device are terminal devices of different protocol releases. For example, a protocol release supported by the first terminal device is Release 17, and a protocol release supported by the second terminal device is Release 15.

The duplex manner includes half-duplex and full-duplex. For example, the first terminal device operates in a half-duplex mode, and the second terminal device operates in a full-duplex mode.

The service includes but is not limited to an Internet of Things application, such as video surveillance and mobile broadband MBB. For example, a service supported by the first terminal device is video surveillance, and a service supported by the second terminal device is mobile broadband MBB.

Specifically, a resource corresponding to the first terminal device may be a first resource, a second resource, or a third resource. Resource information corresponding to the first terminal device may be one or more of time domain position information, frequency domain position information, code domain position information, a resource index, a time domain resource offset, a frequency domain resource offset, a code domain resource offset, a power configuration, or a beam resource of the first resource, the second resource, or the third resource. A resource corresponding to the second terminal device may be the first resource, the second resource, or the third resource. Resource information corresponding to the second terminal device may be one or more of the time domain position information, the frequency domain position information, the code domain position information, the resource index, the time domain resource offset, the frequency domain resource offset, the code domain resource offset, the power configuration, or the beam resource of the first resource, the second resource, or the third resource. The first resource, the second resource, and the third resource are three different resources. Optionally, the first resource is a control resource set, a random access resource, or a synchronization information resource. The second resource has different time domain position information, frequency domain position information, code domain position information, a resource index, a time domain resource offset value, a frequency domain resource offset value, a code domain resource offset value, a power configuration, or a beam resource from those of the first resource. Optionally, the first resource includes one or more resource elements in the second resource. The resource element may be an RB, an RE, a subcarrier, an RB group, an REG bundle, a control channel element, a subframe, a radio frame, a slot, a mini-slot, a symbol, and/or the like. In this case, one or more overlapping resource elements in the first resource element and the second resource element may be in a relationship of time division multiplexing, frequency division multiplexing, or code division multiplexing. Alternatively, the first resource is different from the second resource, and a resource element in the first resource is completely independent of a resource element in the second resource.

Optionally, the third resource includes one or more resource elements in the second resource and/or the first resource. The resource element may be an RB, an RE, a subcarrier, an RB group, an REG bundle, a control channel element, a subframe, a radio frame, a slot, a mini-slot, and/or a symbol, and the like. In this case, one or more overlapping resource elements between the third resource and the first resource element and/or the second resource element may be in a relationship of time division multiplexing, frequency division multiplexing, or code division multiplexing. Alternatively, the third resource is different from both the first resource and the second resource, and a resource element in the third resource is completely independent of the resource element in the first resource or the resource element in the second resource.

Optionally, for the first resource, the time domain resource offset, the frequency domain resource offset, and/or the code domain resource offset of the first resource may be relative to the second resource, or may be relative to the third resource. Similarly, the time domain resource offset, the frequency domain resource offset, and/or the code domain resource offset of the second resource may be relative to the first resource, or may be relative to the third resource. The time domain resource offset, the frequency domain resource offset, and/or the code domain resource offset of the third resource may be relative to the second resource, or may be relative to the first resource. Optionally, the resource offset value may be a preset value. For example, an offset value of the first resource is used as an example. The first resource is 1/2ⁿ of a resource quantity of the second resource or the third resource, and the resource quantity may be a quantity of RBs, a quantity of REs, a quantity of subcarriers, or the like. Alternatively, the resource offset value is a fixed bandwidth, for example, 100 MHz, 50 MHz, 25 MHz, 10 MHz, or 5 MHz. Alternatively, the resource offset value is a corresponding quantity of RBs, for example, 96 RBs, 48 RBs, 24 RBs, 12 RBs, or 6 RBs.

In the following examples, that R1 represents resource information of the first resource, R2 represents resource information of the second resource, R3 represents resource information of the third resource, and N represents that access is not allowed is used for detailed descriptions. Specifically, the resource information may include one or more of the time domain position information, the frequency domain position information, the code domain position information, the resource index, the time domain resource offset, the frequency domain resource offset, the code domain resource offset, the power configuration, and the beam resource. The following table is merely an example. A relationship between different bit statuses and indication content of the at least one piece of first information may be expressed in words, or may be expressed in a table. This is not limited in this application.

Example 1: The at least one piece of first information includes three bits, and the different status values of the at least one piece of first information correspond to different indication content. Optionally, the three bits are fields in the SIB 1, or the three bits include a 1-bit field in the SIB 1 and two bits in the downlink control information for scheduling the SIB 1. Correspondences between the different status values of the at least one piece of first information and the indication content may be shown in Table 5.

**Table 5**

| Status values of the at least one piece of first information | 000 | 001 | 010 | 011 | 100 | 101 | 110 | 111 |
|---|---|---|---|---|---|---|---|---|
| First terminal device | R1 | R1 | R2 | R3 | N | R1 | R2 | N |
| Second terminal device | R1 | R3 | R3 | R3 | R3 | N | N | R1 |

For example, content corresponding to one state of the three bits is: allowing access of the first terminal device based on R1, and allowing access of the second terminal device based on R2, where the state may correspond to the state 000. For example, content corresponding to one state of the three bits is: allowing access of the first terminal device based on R1, and allowing access of the second terminal device based on R3, where the state may correspond to the state 001. For example, content corresponding to one state of the three bits is: allowing access of the first terminal device based on R2, and allowing access of the second terminal device based on R3, where the state may correspond to the state 010. For example, content corresponding to one state of the three bits is: allowing access of the first terminal device based on R3, and allowing access of the second terminal device based on R3, where the state may correspond to the state 011. For example, content corresponding to one state of the three bits is: not allowing access of the first terminal device, and allowing access of the second terminal device based on R3, where the state may correspond to the state 100. For example, content corresponding to one state of the three bits is: allowing access of the first terminal device based on R1, and not allowing access of the second terminal device, where the state may correspond to the state 101. For example, content corresponding to one state of the three bits is: allowing access of the first terminal device based on R2, and not allowing access of the second terminal device, where the state may correspond to the state 110. For example, content corresponding to one state of the three bits is: not allowing access of the first terminal device, and allowing access of the second terminal device based on R1, where the state may correspond to the state 111.

Example 2: The at least one piece of first information includes three bits, and the different status values of the at least one piece of first information correspond to the different indication content. Optionally, the three bits are fields in the SIB 1, or the three bits are fields in the downlink control information for scheduling the SIB 1. The correspondences between the different status values of the at least one piece of first information and the indication content may be shown in Table 6.

**Table 6**

| | | | | | | | | |
|---|---|---|---|---|---|---|---|---|
| Status values of the at least one piece of first information | 000 | 001 | 010 | 011 | 100 | 101 | 110 | 111 |
| First terminal device | N | R1 | R2 | R3 | N | R1 | R2 | N |
| Second terminal device | N | R3 | R3 | R3 | R3 | N | N | R1 |

For example, content corresponding to one state of the three bits is: not allowing access of the first terminal device, and not allowing access of the second terminal device, where the state may correspond to the state 000. For example, content corresponding to one state of the three bits is: allowing access of the first terminal device based on R1, and allowing access of the second terminal device based on R3, where the state may correspond to the state 001. For example, content corresponding to one state of the three bits is: allowing access of the first terminal device based on R2, and allowing access of the second terminal device based on R3, where the state may correspond to the state 010. For example, content corresponding to one state of the three bits is: allowing access of the first terminal device based on R3, and allowing access of the second terminal device based on R3, where the state may correspond to the state 011. For example, content corresponding to one state of the three bits is: not allowing access of the first terminal device, and allowing access of the second terminal device based on R3, where the state may correspond to the state 100. For example, content corresponding to one state of the three bits is: allowing access of the first terminal device based on R1, and not allowing access of the second terminal device, where the state may correspond to the state 101. For example, content corresponding to one state of the three bits is: allowing access of the first terminal device based on R2, and not allowing access of the second terminal device, where the state may correspond to the state 110. For example, content corresponding to one state of the three bits is: not allowing access of the first terminal device, and allowing access of the second terminal device based on R1, where the state may correspond to the state 111.

Example 3: The at least one piece of first information includes two bits, and different status values of the two bits correspond to different indication content. Optionally, the two bits are fields in the SIB 1, or the two bits include one bit in the SIB 1 and one bit in the downlink control information for scheduling the SIB 1. The correspondences between the different status values of the at least one piece of first information and the indication content may be shown in Table 7.

**Table 7**

| | | | | |
|---|---|---|---|---|
| Status values of the at least one piece of first information | 00 | 01 | 10 | 11 |
| First terminal device | R3 | R1 | N | R2 |
| Second terminal device | R3 | N | R1 | R3 |

For example, content corresponding to one state of the two bits is: allowing access of the first terminal device based on R3, and allowing access of the second terminal device based on R3, where the state may correspond to the state 00. For example, content corresponding to one state of the two bits is: allowing access of the first terminal device based on R1, and not allowing access of second terminal device, where the state may correspond to the state 01. For example, content corresponding to one state of the two bits is: not allowing access of the first terminal device, and allowing access of the second terminal device based on R1, where the state may correspond to the state 10. For example, content corresponding to one state of the two bits is: allowing access of the first terminal device based on R2, and allowing access of the second terminal device based on R3, where the state may be corresponding to the state 11.

Example 4: The at least one piece of first information includes two bits, and different status values of the two bits correspond to different indication content. Optionally, the two bits are fields in the SIB 1, or the two bits are fields in the downlink control information for scheduling the SIB 1. For example, content corresponding to one state of the two bits is: not allowing access of the first terminal device, and not allowing access of the second terminal device, where the state may correspond to the state 00. For example, content corresponding to one state of the two bits is: allowing access of the first terminal device based on R1, and not allowing access of the second terminal device, where the state may correspond to the state 01. For example, content corresponding to one state of the two bits is: not allowing access of the first terminal device, and allowing access of the second terminal device based on R1, where the state may correspond to the state 10. For example, content corresponding to one state of the two bits is: allowing access of the first terminal device based on R2, and allowing access of the second terminal device based on R3, where the state may be corresponding to the state 11. The correspondences may be expressed in a table. The correspondences between the different status values of the at least one piece of first information and indication content may be shown in Table 8.

**Table 8**

| | | | | |
|---|---|---|---|---|
| Status values of the at least one piece of first information | 00 | 01 | 10 | 11 |
| First terminal device | N | R1 | N | R2 |
| Second terminal device | N | N | R1 | R3 |

Example 5: The at least one piece of first information includes two bits, and different status values of the two bits correspond to different indication content. Optionally, the two bits are fields in the SIB 1, or the two bits are fields in the downlink control information for scheduling the SIB 1. Correspondences between the different status values of the at least one piece of first information and indication content may be shown in Table 9.

**Table 9**

| | | | | |
|---|---|---|---|---|
| Status values of the at least one piece of first information | 00 | 01 | 10 | 11 |
| First terminal device | N | R1 | N | R1 |
| Second terminal device | N | N | R1 | R1 |

For example, content corresponding to one state of the two bits is: not allowing access of the first terminal device, and not allowing access of the second terminal device, where the state may correspond to the state 00. For example, content corresponding to one state of the two bits is: allowing access of the first terminal device based on R1, and not allowing access of the second terminal device, where the state may correspond to the state 01. For example, content corresponding to one state of the two bits is: not allowing access of the first terminal device, and allowing access of the second terminal device based on R1, where the state may correspond to the state 10. For example, content corresponding to one state of the two bits is: allowing access of the first terminal device based on R1, and allowing access of the second terminal device based on R1, where the state may be corresponding to the state 11.

FIG. 4 is a schematic flowchart of an access information indication method according to this application. The method may be performed by a terminal device and a network device, or may be performed by a chip in a terminal device and a chip in a network device. A network device in FIG. 4 may be the access network device 10 in FIG. 1, and a terminal device may be the terminal device 20 in FIG. 1. The method shown in FIG. 4 may include the following operations.

S400: The network device determines at least one piece of first information.

Specifically, the at least one piece of first information indicates first access permission. The first access permission indicates whether the network device allows access of the first terminal device. Optionally, the at least one piece of first information further indicates whether the network device allows access of the first terminal device within a preset time range.

The at least one piece of first information is included in downlink control information DCI for scheduling an SIB 1, and the DCI indicates a modulation and coding scheme MCS. Specifically, a format of the DCI is 1-0, and the at least one piece of first information includes N bits. Optionally, the N bits include at least one bit in a first field in the DCI and/or at least one bit in five bits indicating an MCS index value.

S401: The network device sends the at least one piece of first information to the first terminal device; and correspondingly, the first terminal device receives the at least one piece of first information from the network device.

Specifically, different status values of the at least one piece of first information may indicate whether the network device allows access of the first terminal device, and/or whether the network device allows access of the first terminal device within a preset time range. The different status values of the first information may correspond to different preset time ranges. A unit of the preset time range may be a second, a minute, a slot, a radio frame, a subframe, a symbol, or the like. Optionally, duration indicated by the preset time range is different from 300 seconds. For example, the preset time range is 300*N seconds, where N is an integer greater than or equal to 2.

S402: Determine whether the network device supports access of the first terminal device and/or allows access of the first terminal device.

Specifically, the first terminal device determines, based on the at least one piece of first information, whether the network device allows access of the first terminal device and/or allows access of the first terminal device within a preset time range.

Example 1: An indication field carrying the at least one piece of first information is one bit in 15 bits (17 bits) of an operation for a spectrum access channel in a cell, and corresponds to two status values. In this case, the two statuses of the at least one piece of first information respectively indicates that the network device allows access of the first terminal device, or the network device does not allow access of the first terminal device. For example, a status value 0 indicates that the network device allows access of the first terminal device, and a status value 1 indicates that the network device does not allow access of the first terminal device. Content indicated by the status value 0 and the status value 1 may be exchanged. This is not limited herein.

Example 2: An indication field carrying the at least one piece of first information is two bits in 15 bits (17 bits) of an operation for a spectrum access channel in a cell, and corresponds to four status values.

**Table 10**

| | | | | |
|---|---|---|---|---|
| Status values of the at least one piece of first information | 00 | 01 | 10 | 11 |
| Indication content | N | T1 | T2 | Y |

In Table 10, T1 and T2 are two different preset time ranges, N indicates that access is allowed, and Y indicates that access is allowed. A status value 00 indicates to the first terminal device that the network device does not allow access of the first terminal device. A status value 01 indicates to the first terminal device that the network device does not allow access of the first terminal device within T1. A status value 10 indicates to the first terminal device that the network device does not allow access of the first terminal device within T2. A status value 11 indicates to the first terminal device that the network device allows access of the first terminal device.

Example 3: An indication field carrying the at least one piece of first information is two bits in 15 bits (17 bits) of an operation for a spectrum access channel in a cell, and corresponds to four status values.

**Table 11**

| | | | | |
|---|---|---|---|---|
| Status values of the at least one piece of first information | 00 | 01 | 10 | 11 |
| Indication content | T1 | T2 | T3 | Y |

A status value 00 indicates to the first terminal device that the network device does not allow access of the first terminal device within a first time range. A status value 01 indicates to the first terminal device that the network device does not allow access of the first terminal device within a second time range. A status value 10 indicates to the first terminal device that the network device does not allow access of the first terminal device within a third time range. A status value 11 indicates to the first terminal device that the network device allows access of the first terminal device. The first time range, the second time range, and the third time range may be three time ranges preconfigured by the network device. For a time range preconfigured by the network device, when duration of the time range configured by the network device is positive infinity, it may also be understood that the network device does not allow access of the first terminal device. For example, when any preset time range of T1, T2, or T3 is positive infinity, it may also be understood that the network device does not allow access of the first terminal device.

Example 4: An indication field carrying the at least one piece of first information is two bits. The 2 bits include one bit in one indication field in 15 bits (17 bits) of an operation for a spectrum access channel in a cell and one most significant bit in five bits that indicate an MCS index value, and correspond to four status values.

Optionally, one bit of a most significant bit of five bits that indicate an MCS index value is used as a flag of specific downlink control information of a device type corresponding to the first terminal device. When a most significant bit of a 5-bit field that indicates the MCS index value is 1, a terminal device of a device type to which a non-first terminal device belongs cannot decode the downlink control information. Further, one bit in one indication field in 15 bits (17 bits) of an operation for a spectrum access channel in a cell indicates whether the network device allows access of the first terminal device and/or allows access of the first terminal device within a preset time range. In this case, it may also be understood that the network device jointly indicates, by using one most significant bit indicating an MCS index value and one bit of 15 bits (17 bits) of an operation for a spectrum access channel in a cell, whether the network device allows access of the first terminal device, whether the network device allows access of a second terminal device, and/or whether the network device allows access of the first terminal device within a preset time range. That the first terminal device and the second terminal device have different first features may also be understood as that the first terminal device and the second terminal device belong to different device types. The first feature includes one or more of a quantity of resources supported or configured by the terminal device, a quantity of transmit antenna ports and/or a quantity of receive antenna ports, a quantity of radio frequency channels, a quantity of HARQ processes, a supported peak rate, an application scenario, a latency requirement, and a processing capability. The quantity of resources may be a quantity of RBs, REs, subcarriers, RB groups, REG bundles, control channel elements, subframes, radio frames, slots, mini-slots, and/or symbols. For a detailed description of the first feature, refer to a related description in step S301 in FIG. 3. Details are not described herein again. Optionally, the first terminal device belongs to a first-type terminal device whose capability is reduced. The second terminal device is a conventional terminal device. A capability of the conventional terminal device is better than that of the first-type terminal device whose capability is reduced.

**Table 12**

| | | | | |
|---|---|---|---|---|
| Status values of the at least one piece of first information | 00 | 01 | 10 | 11 |
| Whether the network device allows access of the second terminal device | Y | Y | N | N |
| Whether the network device allows access of the first terminal device | T1 | Y | T2 | Y |

In an example of Table 12, T1 and T2 are two different preset time ranges. N indicates that access is not allowed, and Y indicates that access is allowed. For a 2-bit field that carries at least one piece of first information, one most significant bit in the 2-bit field is one most significant bit in the 5-bit field that indicates the foregoing indicated MCS index value. One least significant bit in the 2-bit field is one bit of 15 bits (17 bits) of an operation for a spectrum access channel in a cell. When a status value of the most significant bit is 1, it indicates that the second terminal device cannot access the network device. When a status value of the most significant bit is 0, the second terminal device can access the network device. When a status value of the least significant bit is 1, the first terminal device is allowed to access the network device. When a status value of the least significant bit is 0, the first terminal device is not allowed to access the network device within a preset time range.

Example 5: In a 5-bit field that indicates an MCS index value, when a most significant bit is 1, it indicates that corresponding DCI is a PDCCH specific to a terminal device of a type corresponding to the first terminal device. In this case, a second terminal device cannot access the network device. A type and/or content of SI information other than an SIB 1 indicated by the DCI is different from a type and/or content of SI information of the second terminal device. When a most significant bit is 0, the second terminal device can access the network device. Further, optionally, at least one of 23 status values in statuses 01010 to 11111 of the 5-bit field that indicates the MCS index value indicates whether the network device allows access of the first terminal device and/or whether the network device allows access of the first terminal device within a preset time range.

Specifically, when a most significant bit in the 5-bit field that indicates the MCS index value is 1, the second terminal device cannot perform access. When a most significant bit in the 5-bit field that indicates the MCS index value is 0, the second terminal device can perform access. Further, any one or more bits of a second most significant bit, a third most significant bit, a fourth most significant bit, and a least significant bit except the most significant bit may be used together with the most significant bit 1 to indicate whether the network device allows access of the first terminal device, whether the network device allows access of the second terminal device, and/or whether access of the first terminal device is allowed within a preset time range.

**Table 13**

| | | | | |
|---|---|---|---|---|
| Status values of the at least one piece of first information | 10000 | 10001 | 10010 | 10011 |
| Whether the network device allows access of the second terminal device | N | N | N | N |
| Whether the network device allows access of the first terminal device | T1 | Y | T2 | Y |

In an example of Table 13, T1 and T2 are two different preset time ranges. N indicates that access is not allowed, and Y indicates that access is allowed. Because the most significant bit of the 5-bit field that indicates the MCS index value is 1, the at least one piece of first information in this case may be understood as indicating that the network device does not allow access of the second terminal device. It may also be understood that one most significant bit and two least significant bits in the 5-bit field that indicates the MCS index value jointly indicate whether the network device allows access of the second terminal device, whether the network device allows access of the first terminal device, and whether the network device allows access of the first terminal device within a preset time range. Table 13 is merely an example in which four of 16 status values in statuses 10000 to 11111 indicate whether the network device allows access of the first terminal device and/or whether the network device allows access of the first terminal device within a preset time range. This is not limited in this application.

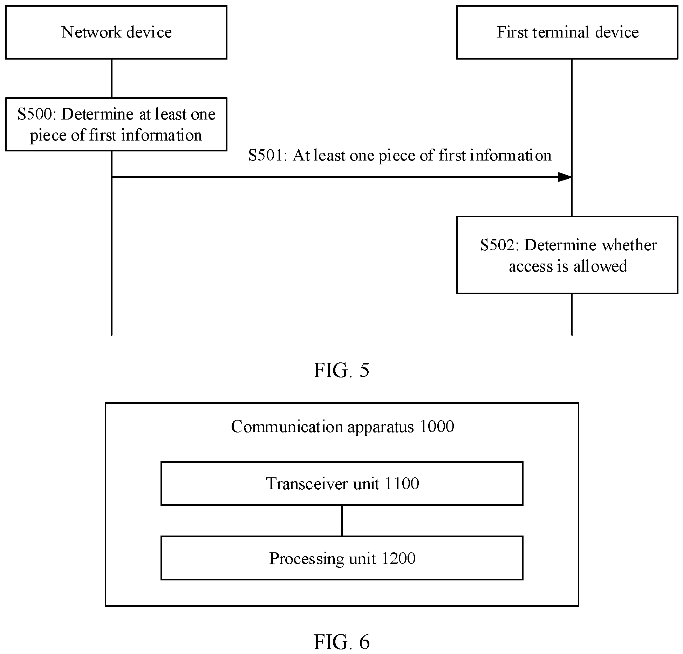

FIG. 5 is a schematic flowchart of an access information indication method according to this application. The method may be performed by a terminal device and a network device, or may be performed by a chip in a terminal device and a chip in a network device. A network device in FIG. 5 may be the access network device 10 in FIG. 1, and a terminal device may be the terminal device 20 in FIG. 1. The method shown in FIG. 5 may include the following operations.

S500: The network device determines at least one piece of first information.

Specifically, the at least one piece of first information indicates whether the network device allows access of the first terminal device.

When there are a plurality of types of terminal devices in a cell to which the first terminal device belongs, the network device may configure first information to indicate whether to allow access of one or more types of terminal devices. The at least one piece of first information is included in an SIB 1. Optionally, the at least one piece of first information is included in N bits in a field indicating a corresponding access identity (access identity) in unified access control, and N is a positive integer. The N bits may indicate whether the network device allows access of N terminal devices. Each of the N terminal devices has a different first feature. It may also be understood that the N terminal devices belong to different device types. The first feature includes one or more of a quantity of resources supported or configured by the terminal device, a quantity of transmit antenna ports and/or a quantity of receive antenna ports, a quantity of radio frequency channels, a quantity of HARQ processes, a supported peak rate, an application scenario, a latency requirement, and a processing capability. The quantity of resources may be a quantity of RBs, REs, subcarriers, RB groups, REG bundles, control channel elements, subframes, radio frames, slots, mini-slots, and/or symbols. For a detailed description of the first feature, refer to a related description in step S301 in FIG. 3. Details are not described herein again.

S501: The network device sends the at least one piece of first information to the first terminal device; and correspondingly, the first terminal device receives the at least one piece of first information from the network device.

Specifically, the first terminal device receives the at least one piece of first information, and the first terminal device determines whether to access the network device.

Example 1: The N bits are one bit, and the one bit indicates whether the network device allows access of the first terminal device.

Example 2: The N bits are two bits, and the two bits indicate whether the network device allows access of the first terminal device and a second terminal device. The first terminal device and second terminal device have different first features. Further, the first terminal device is a first-type terminal device whose capability is reduced. The second terminal device is a second-type terminal device whose capability is reduced.

S502: Determine whether the network device allows access of the first terminal device.

Specifically, the first terminal device determines, based on the at least one piece of first information, whether the network device allows access of the first terminal device.

It should be noted that the resource mentioned in this application may include a time domain resource and a frequency domain resource of a synchronization channel, a control resource set, a random access resource, a PDSCH, and/or a PDCCH. Specifically, when the at least one piece of first information is included in an MIB, the resource in this application may include a time domain resource and a frequency domain resource of a synchronization channel and/or a control resource set. When the at least one piece of first information is included in an SIB, the resource in this application may include a random access resource. When the at least one piece of first information is included in downlink control information for scheduling an SIB 1, the resource in this embodiment may be the SIB 1 or a PDSCH corresponding to the SIB 1. When one piece of first information in the at least one piece of first information is included in an MIB and another piece of first information is included in an SIB 1, the resource in this application may include a random access resource. When one piece of first information in the at least one piece of first information is included in an MIB and another piece of first information is included in downlink control information for scheduling an SIB 1, the resource in this application may be the SIB 1 or a PDSCH corresponding to the SIB 1.

In the foregoing embodiments provided in this application, the methods provided in embodiments of this application are separately described from the perspective of the network device, the terminal device, and interaction between the network device and the terminal device. To implement the functions in the method provided in embodiments of this application, the network device and the terminal device each may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 6 is a schematic diagram of a structure of a possible communication apparatus according to this application. The communication apparatus shown in FIG. 6 may implement functions of the terminal device or the network device in the foregoing methods. Therefore, beneficial effect of the foregoing method embodiments can also be implemented. In this application, the apparatus may be the network device 10 shown in FIG. 1, may be the terminal device 20, or may be a module or unit of the terminal device or the network device.

As shown in FIG. 6, the communication apparatus 1000 includes a transceiver unit 1100 and a processing unit 1200. The communication apparatus 1000 is configured to implement the functions of the terminal device or the network device in the method embodiments shown in FIG. 2 to FIG. 5.

When the communication apparatus 1000 is configured to implement the functions of the network device in the embodiments shown in FIG. 2 to FIG. 5, the transceiver unit 1100 is configured to receive at least one piece of first information, for example, steps S201, S301, S401, and S501, and/or is configured to perform another process of the technology described in this specification. The processing unit 1200 is configured to determine the at least one piece of first information, for example, S200, S300, S400, and S500, and/or is configured to perform another process of the technology described in this specification.

When the communication apparatus 1000 is configured to implement the functions of the terminal device in the embodiments shown in FIG. 2 to FIG. 5, the transceiver unit 1100 is configured to receive at least one piece of first information, for example, steps S201, S301, S401, and S501, and/or is configured to perform another process of the technology described in this specification. The processing unit 1200 is configured to determine the at least one piece of first information, for example, S202, S302, S402, and S502, and/or is configured to perform another process of the technology described in this specification.

In the descriptions of this application, terms such as "first" and "second" are only for distinction and description, but cannot be understood as indicating or implying relative importance, or as indicating or implying an order. "At least one" means one or more, and "a plurality of" means two or more. The term "and/or" describes an association relationship between associated objects and represents that three relationships may exist. For example, A and/or B may indicate the following cases: Only A exists, both A and B exist, and only B exists. A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may represent a, b, c, a and b, a and c, b and c, or a, b and c, where a, b, and c may be singular or plural.

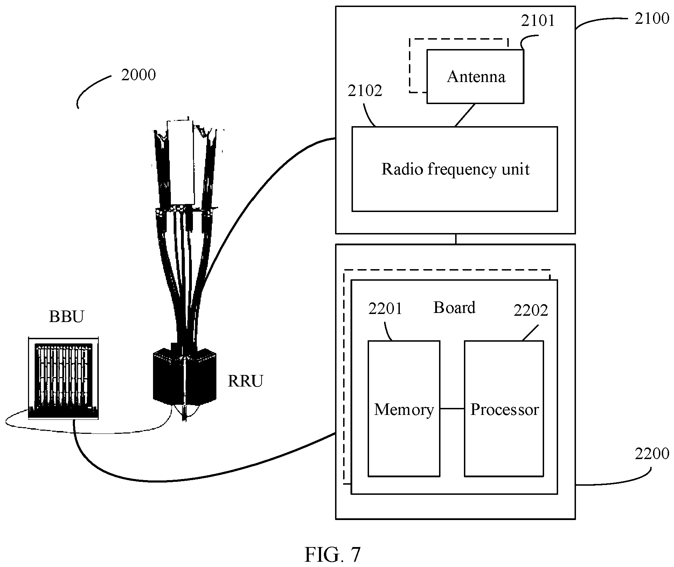

FIG. 7 is a schematic diagram of a structure of a network device according to an embodiment of this application, for example, a schematic diagram of a structure of a base station. The base station 2000 may be applied to the system shown in FIG. 1, to perform functions of the network device in the foregoing method embodiments. As shown in the figure, the base station 2000 may include one or more radio frequency units such as remote radio units (remote radio unit, RRU) 2100 and one or more baseband units (BBU) (also referred to as distributed units (DU)) 2200. The RRU 2100 may be referred to as a transceiver unit or a communication unit, and corresponds to the transceiver unit 1100 in FIG. 6. Optionally, the transceiver unit 2100 may also be referred to as a transceiver, a transceiver circuit, a transceiver, or the like, and may include at least one antenna 2101 and a radio frequency unit 2102. Optionally, the transceiver unit 2100 may include a receiving unit and a sending unit. The receiving unit may correspond to a receiver (or referred to as a receiver or a receiver circuit), and the sending unit may correspond to a transmitter (or referred to as a transmitter or a transmitter circuit). The RRU 2100 is mainly configured to send and receive a radio frequency signal and perform conversion between a radio frequency signal and a baseband signal. The BBU 2200 is mainly configured to perform baseband processing, control the base station, and so on. The RRU 2100 and the BBU 2200 may be physically disposed together, or may be physically separated. In other words, the base station is a distributed base station.

The BBU 2200 is a control center of the base station, and may also be referred to as a processing unit. The BBU 2200 may correspond to the processing unit 1200 in FIG. 6, and is mainly configured to implement a baseband processing function, for example, channel coding, multiplexing, modulation, or spreading. For example, the BBU (the processing unit) may be configured to control the base station to perform an operation procedure related to the network device in the foregoing method embodiments.

In an example, the BBU 2200 may include one or more boards, and a plurality of boards may jointly support a radio access network (for example, an LTE network) having a single access standard, or may separately support radio access networks (for example, the LTE network, a 5G network, or another network) having different access standards. The BBU 2200 further includes a memory 2201 and a processor 2202. The memory 2201 is configured to store necessary instructions and data. The processor 2202 is configured to control the base station to perform a necessary action, for example, configured to control the base station to perform an operation procedure related to the network device in the foregoing method embodiments. The memory 2201 and the processor 2202 may serve one or more boards. In other words, a memory and a processor may be disposed on each board. Alternatively, a plurality of boards may share a same memory and a same processor. In addition, a necessary circuit may further be disposed on each board.

It should be understood that the base station 2000 shown in FIG. 7 can implement each process related to the network device in the foregoing method embodiments. The operations or the functions of the modules in the base station 2000 are separately used to implement corresponding procedures in the foregoing method embodiments. For details, refer to the descriptions in the foregoing method embodiments. Details are not described herein again.

The BBU 2200 may be configured to perform an action that is implemented inside the network device and that is described in the foregoing method embodiments. The RRU 2100 may be configured to perform an action of receiving or sending that is performed by the network device from or to the terminal device and that is described in the foregoing method embodiments. For details, refer to the descriptions in the foregoing method embodiments. Details are not described herein again.

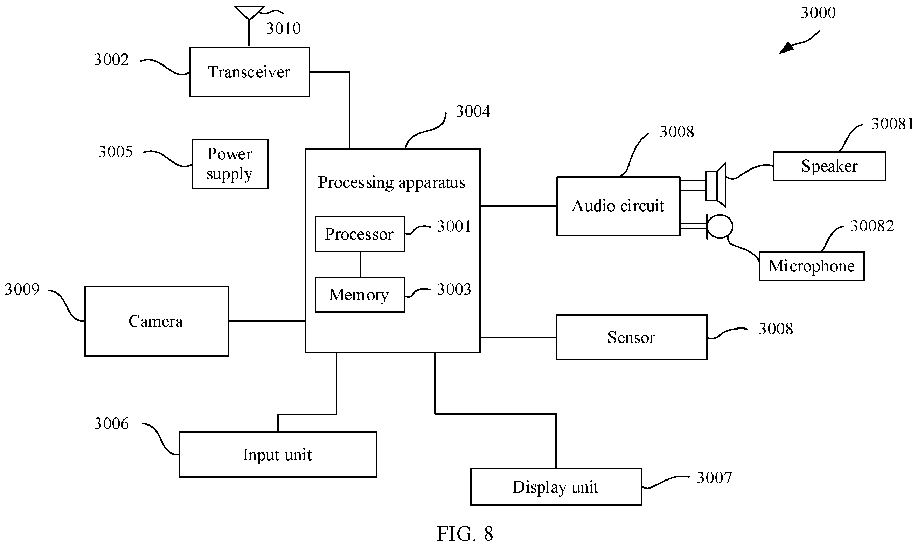

FIG. 8 is a schematic diagram of a structure of a terminal device 3000 according to an embodiment of this application. As shown in the figure, the terminal device 3000 includes a processor 3001 and a transceiver 3002. Optionally, the terminal device 3000 may further include a memory 3003. The processor 3001, the transceiver 3002, and the memory 3003 may communicate with each other through an internal connection path, and transfer a control signal and/or a data signal. The memory 3003 is configured to store a computer program. The processor 3001 is configured to: invoke the computer program from the memory 3003 and run the computer program, to control the transceiver 3002 to receive and send a signal.

The processor 3001 and the memory 3003 may be integrated into one processing apparatus 3004. The processor 3001 is configured to execute program code stored in the memory 3003 to implement the foregoing functions. It should be understood that the processing apparatus 3004 shown in the FIG. 8 is merely an example. During specific implementation, the memory 3003 may alternatively be integrated into the processor 3001, or may be independent of the processor 3001. This is not limited in this application.

The terminal device 3000 may further include an antenna 3010, configured to send, by using a radio signal, uplink data or uplink control signaling output by the transceiver 3002.

It should be understood that, the terminal device 3000 shown in FIG. 8 can implement each process related to the terminal device in the foregoing method embodiments. Operations or functions of modules in the terminal device 3000 are respectively intended to implement corresponding procedures in the foregoing method embodiments. For details, refer to the descriptions in the foregoing method embodiments. Details are not described herein again.

Optionally, the terminal device 3000 may further include a power supply 3005, configured to supply power to various components or circuits in the terminal device.

In addition, to improve functions of the terminal device, the terminal device 3000 may further include one or more of an input unit 3006, a display unit 3007, an audio circuit 3008, a camera 3009, a sensor 3008, and the like. The audio circuit may further include a speaker 30081, a microphone 30082, and the like.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), the field programmable gate array (field programmable gate array, FPGA), another programmable logic device, a discrete gate, a transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable controller (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

An embodiment of the present invention further provides a communication system, including at least one access network device and at least one communication apparatus for executing the foregoing embodiments of the present invention.

Optionally, this application provides a chip system. The chip system is configured to support implementation of the access methods provided in this application, for example, the access methods shown in FIG. 2 to FIG. 5. The chip system includes at least one processor and an interface circuit. The interface circuit is configured to provide input or output of instructions and/or data for the at least one processor. When the at least one processor executes the instructions, the chip system is configured to implement functions of the network device or the terminal device in the access methods provided in this application. In a possible design, the chip system further includes a memory. The memory is configured to store program instructions and data that are necessary for the network device. Certainly, alternatively, the memory may not be in the chip system. The chip system may include a chip, or may include a chip and another discrete component. This is not specifically limited in this embodiment of this application.

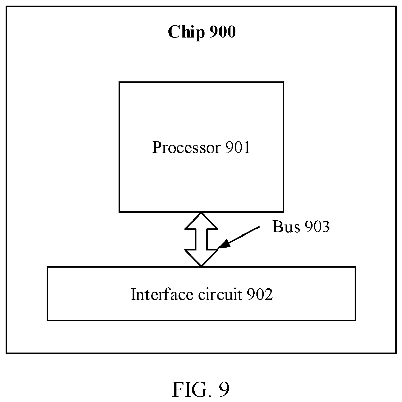

FIG. 9 shows an example of a chip system according to this application. The chip system 900 includes a processor 901 and an interface circuit 902. Optionally, the processor 901 and the interface circuit 902 may be connected through a bus 903.

It should be understood that "an embodiment", "one embodiment", or "this embodiment of the present invention" mentioned in the entire specification means that particular features, structures, or characteristics related to the embodiment are included in at least one embodiment of the present invention. Therefore, "in an embodiment", "in one embodiment", or "in this embodiment of the present invention" appearing throughout the specification does not refer to a same embodiment. In addition, these particular features, structures, or characteristics may be combined in one or more embodiments by using any appropriate manner.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of embodiments of the present invention.

The objectives, technical solutions, and beneficial effect of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made based on the technical solutions of the present invention shall fall within the protection scope of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An access method, wherein the method comprises:
receiving at least one piece of first information from a network device, wherein the at least one piece of first information indicates at least one of a first access capability and first access permission, the first access capability indicates whether the network device supports access of a first terminal device, and the first access permission indicates whether the network device allows access of the first terminal device; and
determining whether the network device supports access of the first terminal device and/or determining whether the network device allows access of the first terminal device.

2. The method according to claim 1, wherein the at least one piece of first information comprises one or more bits;
the at least one piece of first information indicates one or more of the following:
access of the first terminal device is not supported;
access of the first terminal device is not allowed;
access of the first terminal device is allowed, and the first terminal device receives information based on a first resource;
access of the first terminal device is allowed, and the first terminal device receives information based on a second resource;
access of the first terminal device is allowed, and the first terminal device receives information based on a third resource;
access of the first terminal device is not allowed within a first time range;
access of the first terminal device is not allowed within a second time range; and
access of the first terminal device is not allowed within a third time range;
the first resource, the second resource, and the third resource are different resources; and
the first time range, the second time range, and the third time range are three different time ranges.

3. The method according to claim 2, wherein at least one bit state of the at least one piece of first information indicates one or more of time domain position information, frequency domain position information, code domain position information, a resource index, a time domain resource offset, a frequency domain resource offset, a code domain resource offset, a power configuration, or a beam resource of the first resource, the second resource, or the third resource.

4. The method according to claim 2 or 3, wherein the first resource is a control resource set, a random access resource, or a synchronization information resource, the first resource, the second resource, and the third resource have different resource information, and the resource information is at least one of the following: the time domain position information, the frequency domain position information, the code domain position information, the resource index, the power configuration, the beam resource, the time domain resource offset value, the frequency domain resource offset value, or the code domain resource offset value.

5. The method according to claim 1, wherein the at least one piece of first information comprises one or more bits;
the at least one piece of first information indicates one or more of the following:
access of the first terminal device is not supported, and access of a second terminal device is not supported;
access of the first terminal device is not supported, and access of a second terminal device is supported;
access of the first terminal device is supported, and access of a second terminal device is not supported;
access of the first terminal device is not allowed, and access of a second terminal device is not allowed;
access of the first terminal device is not allowed, and access of a second terminal device based on the first resource is allowed;
access of the first terminal device is not allowed, and access of a second terminal device based on the second resource is allowed;
access of the first terminal device based on the first resource is allowed, and access of a second terminal device is not allowed;
access of the first terminal device based on the second resource is allowed, and access of a second terminal device is not allowed;
access of the first terminal device is allowed, access of a second terminal device is allowed, and access of the first terminal device and the second terminal device is based on the first resource; and
access of the first terminal device is allowed, access of a second terminal device is allowed, access of the first terminal device is based on the first resource, and access of the second terminal device is based on the second resource; and
the second terminal device and the first terminal device have different first features, and the first resource and the second resource are different.

6. The method according to claim 5, wherein at least one bit state of the at least one piece of first information indicates one or more of time domain position information, frequency domain position information, code domain position information, a resource index, a time domain resource offset, a frequency domain resource offset, a code domain resource offset, a power configuration, or a beam resource of the first resource or the second resource.

7. The method according to claim 5 or 6, wherein the first resource is a control resource set, a random access resource, or a synchronization information resource, the first resource and the second resource have different resource information, and the resource information is at least one of the following: the time domain position information, the frequency domain position information, the code domain position information, the resource index, the power configuration, the beam resource, the time domain resource offset value, the frequency domain resource offset value, or the code domain resource offset value.

8. The method according to any one of claims 1 to 7, wherein the at least one piece of first information is comprised in a master information block MIB, the at least one piece of first information is comprised in downlink control information DCI, or the at least one piece of first information is comprised in a system information block SIB.

9. The method according to claim 8, wherein a communication frequency between the first terminal device and the network device is within a frequency range 1, and the at least one piece of first information is comprised in the master information block MIB; or
a communication frequency between the first terminal device and the network device is within a frequency range 2, and the at least one piece of first information is comprised in the downlink control information DCI or the system information block SIB.

10. The method according to any one of claims 1 to 7, wherein one piece of first information in the at least one piece of first information is comprised in a master information block MIB, and another piece of first information in the at least one piece of first information is comprised in downlink control information or a system information block.

11. The method according to claim 10, wherein a communication frequency between the first terminal device and the network device is within a frequency range 2.

12. The method according to any one of claims 1 to 11, wherein the at least one piece of first information comprises one piece of first information, and the one piece of first information indicates the first access capability and/or the first access permission; or
the at least one piece of first information comprises two pieces of first information, one piece of first information indicates the first access capability, and the other piece of first information indicates the first access permission.

13. An access method, wherein the method comprises:
determining whether access of a first terminal device is supported and/or whether access of the first terminal device is allowed; and
sending at least one piece of first information to the first terminal device, wherein the at least one piece of first information indicates at least one of a first access capability and first access permission, the first access capability indicates whether a network device supports access of the first terminal device, and the first access permission indicates whether the network device allows access of the first terminal device.

14. The method according to claim 13, wherein the at least one piece of first information comprises one or more bits;
the at least one piece of first information indicates one or more of the following:
access of the first terminal device is not supported;
access of the first terminal device is not allowed;
access of the first terminal device is allowed, and the first terminal device receives information based on a first resource;
access of the first terminal device is allowed, and the first terminal device receives information based on a second resource;
access of the first terminal device is allowed, and the first terminal device receives information based on a third resource;
access of the first terminal device is not allowed within a first time range;
access of the first terminal device is not allowed within a second time range; and
access of the first terminal device is not allowed within a third time range;
the first resource, the second resource, and the third resource are different resources; and
the first time range, the second time range, and the third time range are three different time ranges.

15. The method according to claim 14, wherein at least one bit state of the at least one piece of first information indicates one or more of time domain position information, frequency domain position information, code domain position information, a resource index, a time domain resource offset, a frequency domain resource offset, a code domain resource offset, a power configuration, or a beam resource of the first resource, the second resource, or the third resource.

16. The method according to claim 14 or 15, wherein the first resource is a control resource set, a random access resource, or a synchronization information resource, the first resource, the second resource, and the third resource have different resource information, and the resource information is at least one of the following: the time domain position information, the frequency domain position information, the code domain position information, the resource index, the power configuration, the beam resource, the time domain resource offset value, the frequency domain resource offset value, or the code domain resource offset value.

17. The method according to claim 13, wherein the at least one piece of first information comprises one or more bits;
the at least one piece of first information indicates one or more of the following:
access of the first terminal device is not supported, and access of a second terminal device is not supported;
access of the first terminal device is not supported, and access of a second terminal device is supported;
access of the first terminal device is supported, and access of a second terminal device is not supported;
access of the first terminal device is not allowed, and access of a second terminal device is not allowed;
access of the first terminal device is not allowed, and access of a second terminal device based on the first resource is allowed;
access of the first terminal device is not allowed, and access of a second terminal device based on the second resource is allowed;
access of the first terminal device based on the first resource is allowed, and access of a second terminal device is not allowed;
access of the first terminal device based on the second resource is allowed, and access of a second terminal device is not allowed;
access of the first terminal device is allowed, access of a second terminal device is allowed, and access of the first terminal device and the second terminal device is based on the first resource; and
access of the first terminal device is allowed, access of a second terminal device is allowed, access of the first terminal device is based on the first resource, and access of the second terminal device is based on the second resource; and
the second terminal device and the first terminal device have different first features, and the first resource and the second resource are different resources.

18. The method according to claim 17, wherein at least one bit state of the at least one piece of first information indicates one or more of time domain position information, frequency domain position information, code domain position information, a resource index, a time domain resource offset, a frequency domain resource offset, a code domain resource offset, a power configuration, or a beam resource of the first resource or the second resource.

19. The method according to claim 17 or 18, wherein the first resource is a control resource set, a random access resource, or a synchronization information resource, the first resource and the second resource have different resource information, and the resource information is at least one of the following: the time domain position information, the frequency domain position information, the code domain position information, the resource index, the power configuration, the beam resource, the time domain resource offset value, the frequency domain resource offset value, or the code domain resource offset value.

20. The method according to any one of claims 13 to 19, wherein the at least one piece of first information is comprised in a master information block MIB, the at least one piece of first information is comprised in downlink control information DCI, or the at least one piece of first information is comprised in a system information block SIB.

21. The method according to claim 20, wherein a communication frequency between the first terminal device and the network device is within a frequency range 1, and the at least one piece of first information is comprised in the master information block MIB; or a communication frequency between the first terminal device and the network device is within a frequency range 2, and the at least one piece of first information is comprised in the downlink control information DCI or the system information block SIB.

22. The method according to any one of claims 13 to 19, wherein one piece of first information in the at least one piece of first information is comprised in a master information block MIB, and another piece of first information in the at least one piece of first information is comprised in downlink control information or a system information block.

23. The method according to claim 22, wherein a communication frequency between the first terminal device and the network device is within a frequency range 2.

24. The method according to any one of claims 13 to 23, wherein the at least one piece of first information comprises one piece of first information, and the one piece of first information indicates the first access capability and/or the first access permission; or
the at least one piece of first information comprises two pieces of first information, one piece of first information indicates the first access capability, and the other piece of first information indicates the first access permission.

25. A communication apparatus, comprising at least one processor and an interface circuit, wherein the interface circuit is configured to provide input or output of instructions and/or data for the at least one processor, and when the at least one processor executes the instructions, the apparatus is enabled to implement the method according to any one of claims 1 to 12.

26. A communication apparatus, comprising at least one processor and an interface circuit, wherein the interface circuit is configured to provide input or output of instructions and/or data for the at least one processor, and when the at least one processor executes the instructions, the apparatus is enabled to implement the method according to any one of claims 13 to 24.

27. A computer-readable storage medium, comprising a program or instructions, wherein when the program or the instructions are run on a computer, the method according to any one of claims 1 to 12 is performed.

28. A computer-readable storage medium, comprising a program or instructions, wherein when the program or the instructions are run on a computer, the method according to any one of claims 13 to 24 is performed.
